# EUROPEAN PATENT APPLICATION

(11) **EP 4 520 487 A1**
(43) Date of publication of application: **12.03.2025**
(21) Application number: 24196985.6
(22) Date of filing: 28.08.2024
(51) Int. Cl.: B25J 9/16, B65B 69/00

(54) **ROBOT CONTROL SYSTEM, ROBOT CONTROLLER, AND ROBOT CONTROL METHOD**

(30) Priority: 30.08.2023 JP 2023139964
(71) Applicant: Kabushiki Kaisha Yaskawa Denki, Kitakyushu-shi, Fukuoka 806-0004 (JP)
(72) Inventor: Miyauchi, Kohei, Kitakyushu-shi, Fukuoka, 806-0004 (JP); Jibiki, Katsutoshi, Kitakyushu-shi, Fukuoka, 806-0004 (JP); Tanaka, Eisuke, Kitakyushu-shi, Fukuoka, 806-0004 (JP); Oba, Ryoichi, Kitakyushu-shi, Fukuoka, 806-0004 (JP)
(74) Representative: Grünecker Patent- und Rechtsanwälte PartG mbB

(57) **Abstract**

To prevent a content from adhering to at least one of a robot and a cutter, one or more robots (20A, 20B) of a robot control system (1) each perform work on a material (M) including a content. A cut control module (101) causes the robots (20A, 20B) to move at least one of a cutter (40) and the material (M) so that a cut is made in the material (M) with the cutter (40). A rotation control module (103) causes the robots (20A, 20B) to rotate the material (M) so that the cut faces downward.

## Description

### BACKGROUND OF THE INVENTION

### Field of the Invention

The present disclosure relates to a robot control system, a robot controller, and a robot control method.

### Description of the Related Art

For example, in Japanese Patent Application Laid-open No. Hei 7-081870, there is disclosed a robotic bag-opening hand which includes a bag-opening hand main body including a connecting part connected to a robot arm, a vertically movable attraction part held in the center of the main body, a holding part which includes two holding sections, and a holding part drive unit which drives the two holding sections. The robotic bag opening hand as disclosed in Japanese Patent Application Laid-open No. Hei 7-081870 uses a cutter to cut the center of the bottom face of the bag, and rotates the holding part to discharge a content of the bag.

### SUMMARY OF THE INVENTION

An object of the present disclosure is, for example, to prevent a content from adhering to at least one of a robot and a cutter.

A robot control system according to one aspect of the present disclosure includes: one or more robots each configured to perform work on a material including a content; a cut control module configured to cause the one or more robots to move at least one of a cutter and the material so that a cut is made in the material with the cutter; and a rotation control module configured to cause the one or more robots to rotate the material so that the cut faces downward.

According to the present disclosure, for example, it is possible to prevent a content from adhering to at least one of the robot and the cutter.

### BRIEF DESCRIPTION OF THE DRAWINGS

FIG. 1 is a diagram for illustrating an example of a hardware configuration of a robot control system.
FIG. 2 is a diagram for illustrating an example of a space in which a robot controller, a first robot, and a second robot are arranged.
FIG. 3 is a diagram for illustrating an example of a positional relationship among a work table, a first support section, a second support section, and a material.
FIG. 4 is a diagram for illustrating an example of a photography position and a photographing direction of a camera.
FIG. 5 is a diagram for illustrating an example of how a cut is made in the material.
FIG. 6 is a diagram for illustrating an example of how a connecting member of the first robot and a connecting member of the first support section are connected, and a connecting member of the second robot and a connecting member of the second support section are connected.
FIG. 7 is a diagram for illustrating an example of how the material is moved above the container.
FIG. 8 is a diagram for illustrating an example of how the content of the material fall into the container.
FIG. 9 is a diagram for illustrating an example of functions implemented by the robot control system.
FIG. 10 is a diagram for illustrating an example of a movement path along which the first robot moves the cutter.
FIG. 11 is a diagram for illustrating an example of movement paths for the first robot and the second robot to support the material.
FIG. 12 is a flowchart for illustrating an example of processing executed by the robot control system.
FIG. 13 is a flowchart for illustrating an example of details of processing steps of Step S2 to Step S4.
FIG. 14 is a diagram for illustrating an example of functions implemented by a robot control system according to modification examples of the present disclosure.
FIG. 15 is a diagram for illustrating an example of how the material is deformed in Modification Example 1.
FIG. 16 is a diagram for illustrating an example of how the material is tilted in Modification Example 2.
FIG. 17 is a diagram for illustrating an example of how the material is moved in Modification Example 5.
FIG. 18 is a diagram for illustrating an example of how the material is moved in Modification Example 6.

### DESCRIPTION OF THE EMBODIMENTS

### [1. Hardware Configuration of Robot Control System]

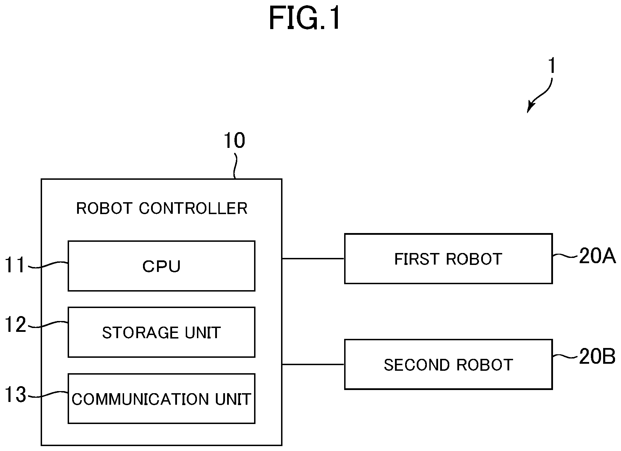

Description is given of an example of an embodiment of a robot control system, a robot controller, and a robot control system according to the present disclosure. FIG. 1 is a diagram for illustrating an example of a hardware configuration of the robot control system. For example, a robot control system 1 includes a robot controller 10, a first robot 20A, and a second robot 20B. In the following, when the first robot 20A and the second robot 20B are not distinguished, those robots are simply referred to as "robot 20. "

The robot controller 10 is a device for controlling one or more robots 20. The robot controller 10 is connected to the one or more robots 20 via a cable such as a power line, a signal line, or a communication line. In this embodiment, the robot controller 10 controls the first robot 20A and the second robot 20B. The robot controller 10 can control any number of robots 20. The robot controller 10 may control only one robot 20 or may control three or more robots 20.

For example, the robot controller 10 includes a CPU 11, a storage unit 12, and a communication unit 13. The CPU 11 includes one or more processors. The storage unit 12 includes at least one of a volatile memory and a non-volatile memory. The communication unit 13 includes at least one of a communication interface for wired communication and a communication interface for wireless communication. The robot controller 10 also includes other hardware such as a power supply unit for supplying electric power to one or more motors included in the robot 20.

Each of the first robot 20A and the second robot 20B is a device which includes one or more motors that are controlled by the robot controller 10. In this embodiment, description is given of a case in which each of the first robot 20A and the second robot 20B is a vertically articulated robot. Each of the first robot 20A and the second robot 20B may be of any type. For example, each of the first robot 20A and the second robot 20B may be a horizontally articulated robot, a parallel link robot, or a Cartesian robot. Each of the first robot 20A and the second robot 20B may have any number of axes. Each of the first robot 20A and the second robot 20B may have, for example, any of 4 axes to 7 axes.

The program or the data stored in the storage unit 12 may be supplied to the robot controller 10 via a network such as an industrial network, the Internet, or a LAN. For example, the robot controller 10 may include at least one of a reading unit (for example, a memory card slot) for reading a computer-readable information storage medium and an input/output unit (for example, a USB terminal) for connecting to an external apparatus. The program or the data stored in the computer-readable information storage medium may be supplied to the robot controller 10 via the reading unit or the input/output unit.

Further, the robot controller 10 may include any hardware. The hardware configuration of the robot controller 10 is not limited to the example described above. For example, the robot controller 10 may include a circuit such as an FPGA or an ASIC. In this embodiment, description is given of a case in which the CPU 11 corresponds to a configuration called "circuitry," but another circuit such as an FPGA or an ASIC may correspond to the circuitry.

Further, the device included in the robot control system 1 is not limited to the example of FIG. 1. The robot control system 1 may include any device. For example, the robot control system 1 may include a host controller for controlling the robot controller 10. For example, the robot control system 1 may include a sensor such as a motor encoder, a torque sensor, a position sensor, an acceleration sensor, a gyroscope, a pressure-sensitive sensor, a contact sensor, a force sensor, a weight sensor, or any other sensor. Those sensors may be connected to the robot controller 10, or may be included in each of the first robot 20A and the second robot 20B.

The robot control system 1 may include a plurality of the robot controllers 10. For example, the first robot 20A may be controlled by a first robot controller 10. The second robot 20B may be controlled by a second robot controller 10. In this case, the first robot controller 10 and the second robot controller 10 are communicably connected via a network such as an industrial network or a LAN. The first robot controller 10 and the second robot controller 10 may communicate to and from each other as appropriate to operate each of the first robot 20A and the second robot 20B.

### [2. Overview of Robot Control System]

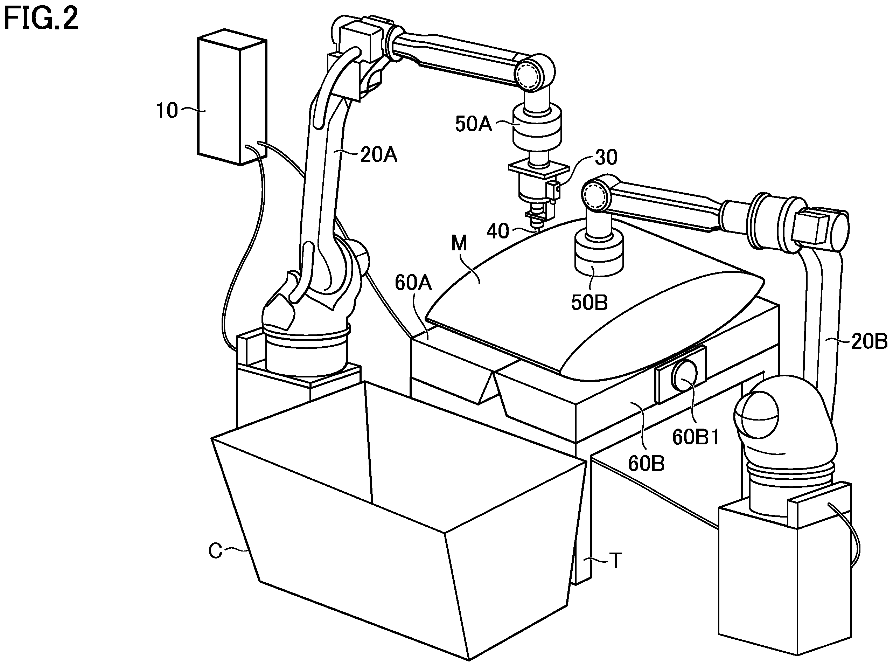

FIG. 2 is a diagram for illustrating an example of a space in which the robot controller 10, the first robot 20A, and the second robot 20B are arranged. For example, the robot controller 10, the first robot 20A, and the second robot 20B are arranged in a facility such as a factory. In the example of FIG. 2, a camera 30 and a cutter 40 are each attached to the tip of the first robot 20A. A connecting member 50B connectable to a connecting member 60B1 of a second support section 60B, which is described later, is attached to the tip of the second robot 20B.

For example, the camera 30 is a 3D camera which includes a depth sensor. The camera 30 may be of any type and is not limited to a 3D camera. For example, the camera 30 may be a 2D camera (a camera without a depth sensor) or an infrared camera. The camera 30 may generate moving images by continuously capturing images at a predetermined frame rate, or may generate still images without continuously capturing images. The camera 30 may also be referred to as "vision sensor." The camera 30 may be attached to the second robot 20B. A separate camera 30 may be attached to each of the first robot 20A and the second robot 20B.

For example, the cutter 40 is an ultrasonic cutter. The cutter 40 may be of any type and is not limited to an ultrasonic cutter. For example, the cutter 40 may be a vibration cutter which vibrates at high speed instead of by ultrasonic vibration, or a cutter which does not generate vibrations. In this embodiment, a case in which the cutter 40 is removably connected to the first robot 20A is given as an example, but the cutter 40 is not limited to being removably connected, and may be fixed to the first robot 20A. The cutter 40 may be attached to the second robot 20B. A separate cutter 40 may be attached to each of the first robot 20A and the second robot 20B.

In this embodiment, the first robot 20A and the second robot 20B are arranged to sandwich the work table T. For example, a first support section 60A and a second support section 60B are placed on the work table T. The first support section 60A includes a connecting member 60A1 which can be connected to the connecting member 50A of the first robot 20A. The second support section 60B includes the connecting member 60B1 which can be connected to the connecting member 50B of the second robot 20B. It is noted that in FIG. 2, the connecting member 60A1 has the same configuration as that of the connecting member 60B1, although the angular relationship in the drawing is not shown.

In the example of FIG. 2, a material M including a content is placed on the first support section 60A and the second support section 60B. The content are object(s) packaged by the material M. The content may be any object. For example, the content may be a raw material or an ingredient of a product produced in a factory. The content may be solid or liquid. The content may be in powder form. The content is transferred to a container C by the first robot 20A and the second robot 20B. The container C has a capacity which is capable of storing the content. The container C may also be referred to as "hopper." The container C may be a publicly known container.

The material M is an object for wrapping the content. The material M may also be referred to as "packaging material." For example, the material M is a bag, a box, a bottle, or a case. In this embodiment, a case in which the material M is a kraft bag is given as an example. The material M may be any object. The material M is not limited to a kraft bag. For example, the material M may be a poly bag, a polyvinyl bag, an aluminum vapor-deposited bag, a paper bag, a jute bag, a flexible intermediate bulk container, an infusion bag, a cloth box, a cloth case, a plastic bottle, a paper carton, or another object.

For example, the material M is the object to be worked on by the first robot 20A and the second robot 20B, and thus may be referred to as "workpiece." Each of the first robot 20A and the second robot 20B can perform any work on the material M. For example, the work that each of the first robot 20A and the second robot 20B performs on the material M may be cutting, supporting, transporting, rotating, deforming, or other work. As used in this embodiment, "work" also includes the concept of processing or handling.

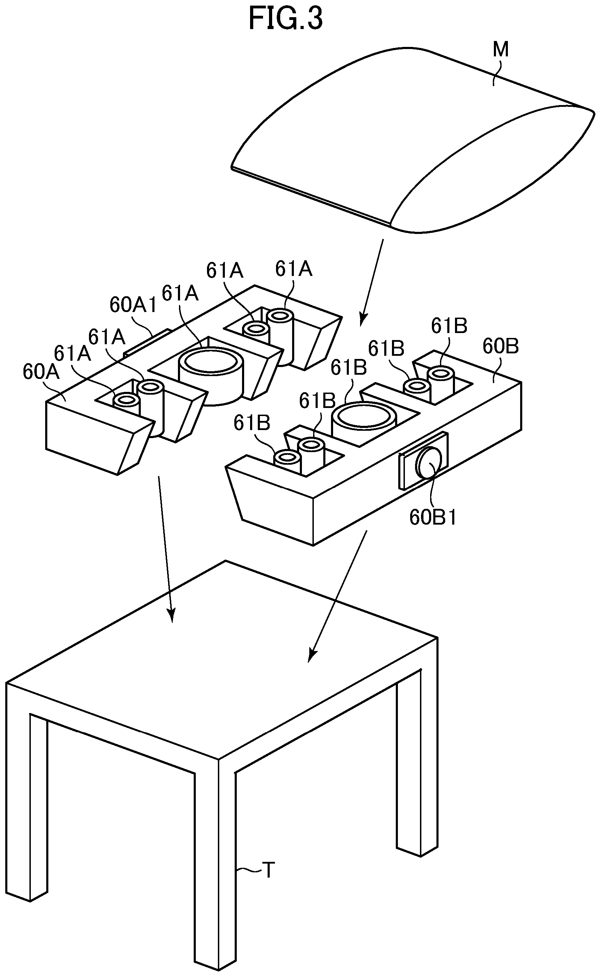

FIG. 3 is a diagram for illustrating an example of the positional relationship among the work table T, the first support section 60A, the second support section 60B, and the material M. As illustrated in FIG. 3, in this embodiment, the first support section 60A and the second support section 60B are not connected, and are separable from each other. For example, the first support section 60A and the second support section 60B are placed on the work table T so that the first support section 60A and the second support section 60B touch each other or are spaced apart from each other by less than a predetermined distance. The connecting members 60A1 and 60B1 face the outer side with respect to each other. For example, the connecting member 60A1 faces the first robot 20A, and the connecting member 60B1 faces the second robot 20B.

In this embodiment, attracting devices 61A and 61B are arranged on respective top faces of the first support section 60A and the second support section 60B. For example, the attracting devices 61A and 61B include a suction cup (sucker) which contacts the material M, and a pump for suction. The attracting devices 61A and 61B use the pump to create a vacuum state between the suction cup and the material M. The attracting devices 61A and 61B may be any type of suction device. For example, the attracting devices 61A and 61B may be of a mat-like type instead of being a suction cup, or may be of a type referred to as a vacuum gripper. The attracting devices 61A and 61B are not required to have a suction function. For example, the attracting devices 61A and 61B may be of a type that uses magnetic force or electrostatic force to attract the material M.

In this embodiment, the robot controller 10 controls each of the first robot 20A and the second robot 20B so that each of the first robot 20A and the second robot 20B performs work for transferring the content of the material M to the container C. For example, the robot controller 10 controls the first robot 20A so that the first robot 20A photographs the material M with the camera 30 before the work on the material M is performed.

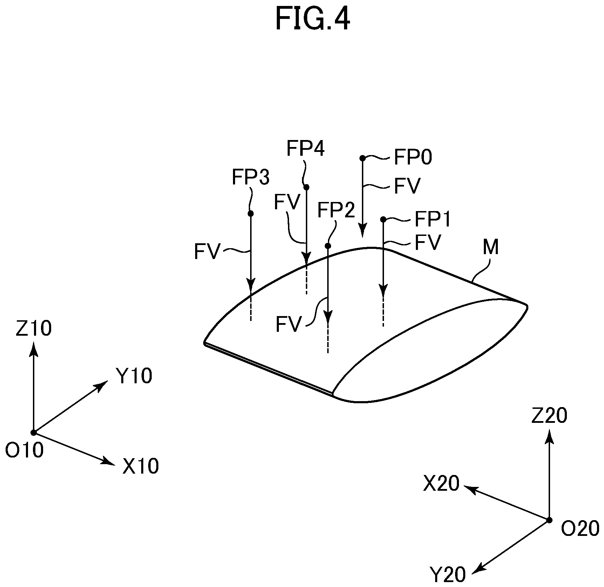

FIG. 4 is a diagram for illustrating an example of a photography position and a photographing direction of the camera 30. For example, the robot controller 10 identifies positions in real space in terms of coordinate axes in which an X10 axis, a Y10 axis, and a Z10 axis are set around an origin O10 corresponding to the base of the first robot 20A. The robot controller 10 identifies positions in the real space in terms of coordinate axes in which an X20 axis, a Y20 axis, and a Z20 axis are set around an origin 020 corresponding to the base of the second robot 20B.

The coordinate axes used by the robot controller 10 to control each of the first robot 20A and the second robot 20B may be any coordinate axes used in robot control. The coordinate axes are not limited to the example illustrated in FIG. 4. For example, coordinate axes based on a motor included in each of the first robot 20A and the second robot 20B may be set. Coordinate axes based on a part other than a motor included in each of the first robot 20A and the second robot 20B (for example, the position of a sensor) may be set.

In this embodiment, the robot controller 10 controls the first robot 20A so that the camera 30 photographs the top face of the material M while moving above the material M. For example, the robot controller 10 controls the first robot 20A so that the camera 30 moves to a position FP0, which is an initial position. A photographing direction FV of the camera 30 is the perpendicular direction (negative direction of the Z10 axis, or downward direction). In the example of FIG. 4, it is assumed that the photographing direction FV does not change during the photographing by the camera 30, but the photographing direction FV may change.

For example, positions FP1, FP2, FP3, and FP4 through which the camera 30 passes are defined on a horizontal plane (X10-Y10 plane) including the position FP0. The shape of a line connecting the positions FP1, FP2, FP3, and FP4 is the same or approximately the same as the shape of the cut made in the top face of the material M. The robot controller 10 controls the first robot 20A so that the camera 30 starts from the position FP0, passes by the positions FP1, FP2, FP3, and FP4, and returns to the position FP0. The camera 30 continuously photographs the material M while moving. The camera 30 transmits the photographed images generated by photographing the material M to the robot controller 10.

For example, the robot controller 10 obtains the distance between each of the positions FP1, FP2, FP3, and FP4 and the top face of the material M based on the photographed images of the camera 30. The robot controller 10 determines the movement path of the cutter 40 based on the results of measuring the distance between each of the positions FP1, FP2, FP3, and FP4 and the top face of the material M. The cutter 40 is attached to a tip portion of the first robot 20A, and thus the movement path of the cutter 40 can also be referred to as "movement path of the tip portion of the first robot 20A."

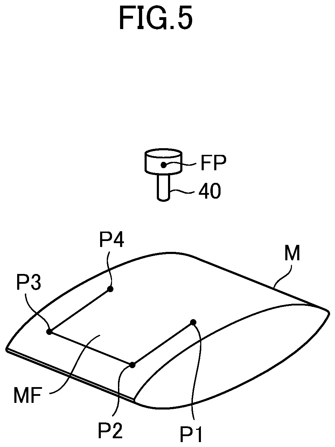

FIG. 5 is a diagram for illustrating an example of how a cut is made in the material M. The cut is a mark made when the surface of the material M is cut with the cutter 40. The cut can also be referred to as a cutting place on the surface of the material M. In the example of FIG. 5, the robot controller 10 determines a position separated from the positions FP1, FP2, FP3, and FP4 by the distance to the top face of the material M as positions P1, P2, P3, and P4 through which the cutter 40 passes. In the example of FIG. 5, the initial position of the cutter 40 is set as the position FP0, but the initial position of the cutter 40 may be another position.

For example, the robot controller 10 determines the movement path of the cutter 40 so that the cutter 40 starts from the position FP0, passes through the positions P1, P2, P3, and P4 on the surface of the material M, and returns to the position FP0 again. The robot controller 10 controls the first robot 20A so that the cutter 40 moves along the movement path. The cutter 40 may be set such that the cutter 40 is not pulled out from the material M during movement by the cutter 40, or the cutter 40 may be set such that the cutter 40 is pulled out from the material M during movement by the cutter 40 and then put into the material M again.

In the example of FIG. 5, a cut is made in the material M so that a part of the material M is not hollowed out. Accordingly, the portion bordered by the path from the position P1 to the position P4 has a flap shape. This portion is hereinafter referred to as "flap MF." The cut may also be referred to as an outline of the flap MF. The flap MF can open and close in accordance with the orientation of the material M. In the state illustrated in FIG. 5, the cut faces upward, and thus the flap MF is in a closed state. When the material M is rotated so that the cut faces downward, the flap MF gradually turns outward, and an opening of the material M is exposed.

For example, when a cut is made in the material M, the robot controller 10 causes the first robot 20A to retract the camera 30 and the cutter 40. The method of retracting the camera 30 and the cutter 40 by the first robot 20A may be a publicly known method adopted as a method of replacing an end effector in robot control. This method may also be referred to as "tool change." The command for the tool change may be executed based on commands defined in various languages, such as robot language.

For example, when the camera 30 and the cutter 40 are retracted from the first robot 20A, the robot controller 10 causes the first robot 20A to move the connecting member 50A so that the connecting member 50A of the first robot 20A is connected to the connecting member 60A1 of the first support section 60A. The robot controller 10 causes the second robot 20B to move the connecting member 50B so that the connecting member 50B of the second robot 20B is connected to the connecting member 60B1 of the second support section 60B. A publicly known method adopted in tool change may be used for those connection methods. The connecting member 50B of the second robot 20B may be connected to the connecting member 60B1 of the second support section 60B from the beginning.

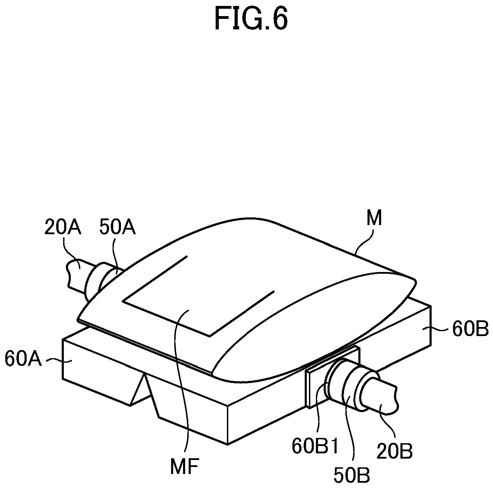

FIG. 6 is a diagram for illustrating an example of how the connecting member 50A of the first robot 20A and the connecting member 60A1 of the first support section 60A are connected, and the connecting member 50B of the second robot 20B and the connecting member 60B1 of the second support section 60B are connected. In the example of FIG. 6, only the portions near the tips of the first robot 20A and the second robot 20B are illustrated, and other portions are omitted. For example, the robot controller 10 causes each of the first robot 20A and the second robot 20B to move the material M above the container C.

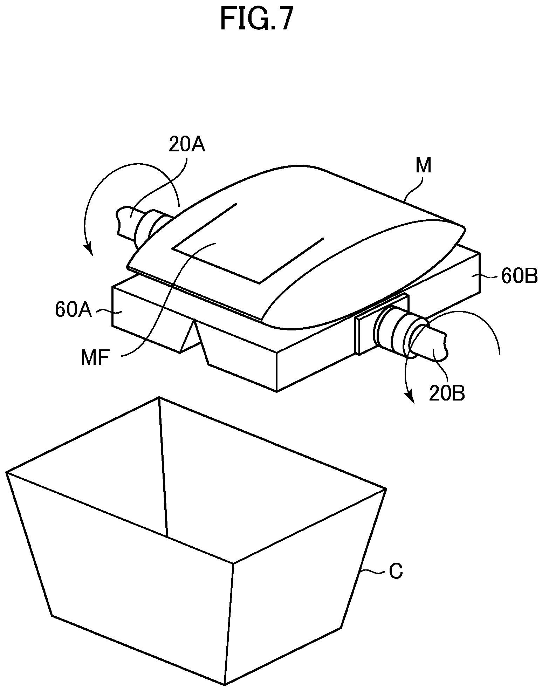

FIG. 7 is a diagram for illustrating an example of how the material M is moved above the container C. For example, when the material M is moved above the container C, the robot controller 10 causes each of the first robot 20A and the second robot 20B to rotate the material M so that the cut of the material M faces downward. In this embodiment, the robot controller 10 causes the first robot 20A and the second robot 20B to rotate the material M slowly so that the shape of the material M (center of gravity or balance of the content) does not change suddenly. When the material M is rotated, the flap MF of the material M gradually turns outward, and the content of the material M gradually come out and fall into the container C.

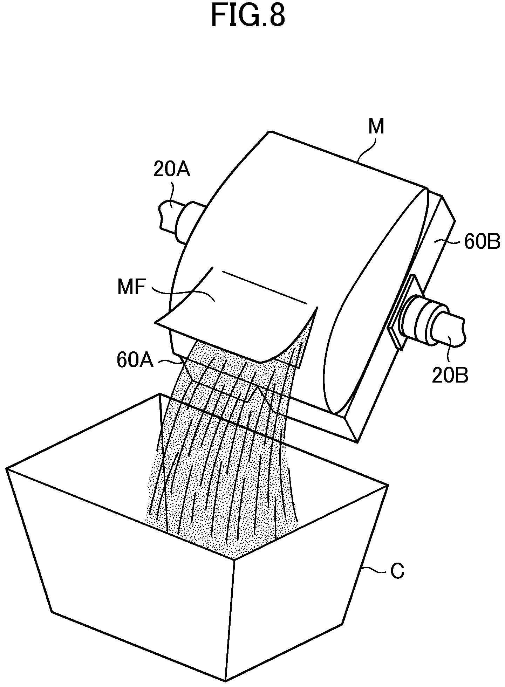

FIG. 8 is a diagram for illustrating an example of how the content of the material M fall into the container C. For example, when the material M is rotated to some extent, the content falls to the container C to some extent, and thus even when the rotation speed of the material M is increased, the shape of the material M (center of gravity or balance of the content) does not change suddenly. Thus, in this embodiment, the robot controller 10 gradually increases the rotation speed of each of the first robot 20A and the second robot 20B. The flap MF of the material M turns further outward, and the content of the material M comes out one after another and fall into the container C.

For example, the robot controller 10 causes the first robot 20A and the second robot 20B to rotate the material M until the flap MF of the material M turns outward and the exposed opening faces downward. In this embodiment, description is given of the control executed until the content of the material M has come out to a certain extent and fallen into the container C. Description of the control executed after that is given in modification examples described later. A robot control system 1 in which the control described in the modification examples is not executed is also included in the scope of the present disclosure.

As described above, the robot control system 1 causes the first robot 20A to move the cutter 40 so that a cut is made in the material M with the cutter 40. The robot control system 1 causes each of the first robot 20A and the second robot 20B to support the material M in which the cut has been made. The robot control system 1 causes each of the first robot 20A and the second robot 20B to rotate the material M in the supported state so that the cut faces downward. After the cut is made on the top face of the material M, the material M is rotated so that the cut faces downward, and thus the robot control system 1 can prevent the content from adhering to each of the first robot 20A, the second robot 20B, and the cutter 40. Details of the robot control system 1 are now described.

### [3. Functions implemented by Robot Control System]

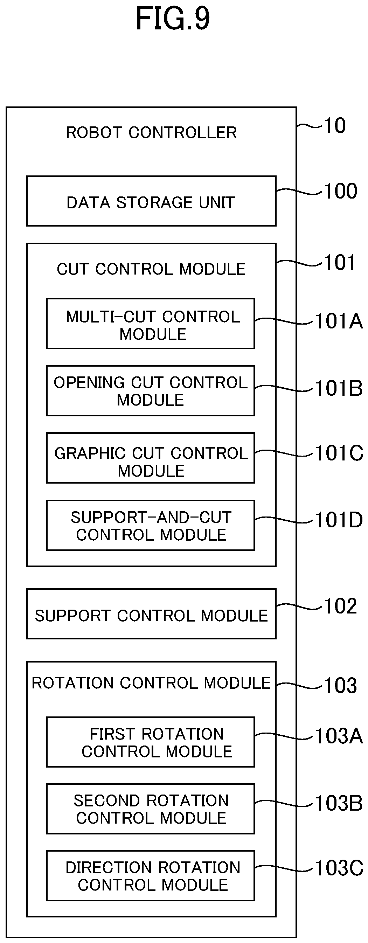

FIG. 9 is a diagram for illustrating an example of functions implemented by the robot control system 1. For example, the robot controller 10 includes a data storage unit 100, a cut control module 101, a support control module 102, and a rotation control module 103. The data storage unit 100 is implemented by the storage unit 12. Each of the cut control module 101, the support control module 102, and the rotation control module 103 is implemented by the CPU 11.

### [3-1. Data Storage Unit]

The data storage unit 100 stores data required for the robot controller 10 to control the robots 20. For example, the data storage unit 100 stores programs including code indicating details of control of the robots 20, and parameters referred to by the programs. The parameters may be any parameters used in robot control. For example, the parameters may indicate a current position, orientation (posture), movement speed, rotation speed, or other states of the robots 20.

The programs can be written in any language. For example, the programs may be written in a robot language or a ladder language. The code included in the programs may be any code that is adopted in those languages. Code may also be referred to as "commands." For example, the program includes code for moving each robot 20 to a predetermined position, code for changing the orientation (posture) of each robot 20, code for controlling the moving speed of each robot 20, code for controlling the rotation speed of each robot 20, tool change code, or other code. Each piece of code may be code defined in a publicly known language.

In this embodiment, a recognition program, a cut program, a support program, and a rotation program are described as examples of the programs. Each of the recognition program, the cut program, the support program, and the rotation program corresponds to a subroutine, and thus there may be an additional program corresponding to a main routine which calls those programs. The recognition program, the cut program, the support program, and the rotation program may be combined into one program.

For example, the recognition program is a program for the robot controller 10 to recognize the position and the shape of the material M based on the photographed images generated by the camera 30. The recognition program includes code for recognizing the position and the shape of the material M based on the photographed images generated by camera 30. For example, when the surface of the material M is curved, the shape of the curved surface is also identified by the recognition program.

For example, the recognition program may include code for causing the first robot 20A to move the camera 30 and code for causing the first robot 20A to change the orientation of the camera 30. In this embodiment, the recognition program includes code for controlling the first robot 20A so that the camera 30 starts from the position FP0, passes by the positions FP1, FP2, FP3, and FP4, and returns to the position FP0. The code may be included in a program other than the recognition program. The recognition program may also include other code. The position and the direction in which the camera 30 photographs the material M are not limited to the example of this embodiment. The camera 30 can photograph the material M from any position and any direction.

Any method used in the image processing field can be used as the method of identifying the position and the shape of the material M. The recognition program may be a program used in publicly known object detection. In this embodiment, the camera 30 is a 3D camera, and hence the recognition program includes code for recognizing the position and the shape of the material M based on a photographed image (an image including the depth between the camera 30 and the subject) taken by the 3D camera. For example, the recognition program identifies the three-dimensional position and the three-dimensional shape of the material M based on a plurality of photographed images taken by the camera 30. As another example, the position and the shape of the material M may be detected by a sensor other than the camera 30 (for example, a laser displacement meter).

For example, the cut program is a program which indicates a series of operations in which the robots 20 make a cut in the material M. In this embodiment, the first robot 20A makes a cut in the material M with the cutter 40, and thus the cut program includes code for causing the first robot 20A to move the cutter 40. For example, the cut program includes code for determining the movement path along which the cutter 40 is to be moved by the first robot 20A, and code for causing the first robot 20A to move the cutter 40 along the movement path. Any algorithm may be used to determine the movement path. For example, linear interpolation or link interpolation may be used to determine the movement path. This point applies to other path determination methods as well.

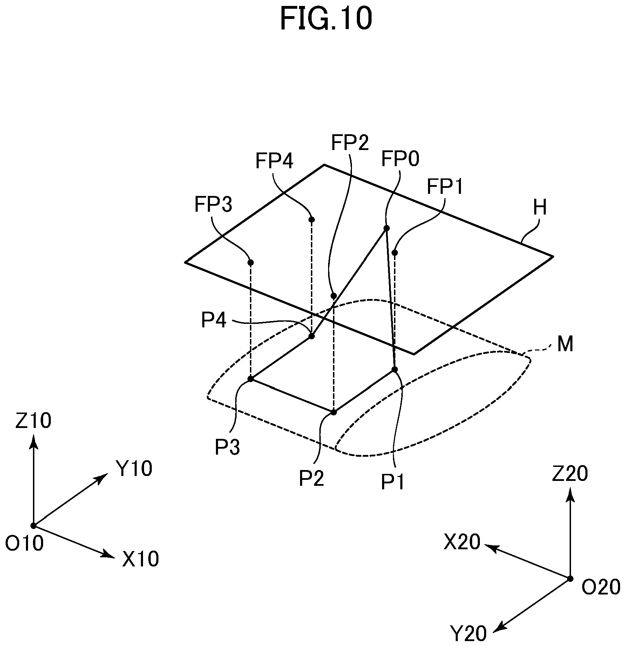

FIG. 10 is a diagram for illustrating an example of the movement path along which the first robot 20A moves the cutter 40. In the example of FIG. 10, the cut program includes code for determining a path which starts from the position FP0, passes through the positions P1, P2, P3, and P4 on the top face of the material M, and returns to the position FP0, as the movement path of the cutter 40. For example, the position FP0 is the initial position when the first robot 20A moves the cutter 40. The position FP0 is determined in advance.

In this embodiment, on the horizontal plane (in FIG. 10, the X10-Y10 plane) H including the position FP0, a position FP1 corresponding to the position P1, a position FP2 corresponding to the position P2, a position FP3 corresponding to the position P3, and a position FP4 corresponding to the position P4 are determined in advance. The positions FP1, FP2, FP3, and FP4 are each a position having the same positions in the horizontal direction (in FIG. 10, the X10 coordinate and the Y10 coordinate) as the positions P1, P2, P3, and P4, respectively. A line connecting the positions FP1, FP2, FP3, and FP4 indicates the shape of the cut.

For example, the cut program includes code for acquiring the distance from each of the positions FP1, FP2, FP3, and FP4 to the surface of the material M based on the position and the shape of the material M. The cut program also includes code for determining a position separated from each of the positions FP1, FP2, FP3, and FP4 by the acquired distance in the perpendicular direction (in FIG. 10, negative direction of the Z10 axis, or downward direction) as the positions P1, P2, P3, and P4.

For example, each of the positions P1, P2, P3, and P4 is a position on the top face of the material M. The cut program includes code for determining a path which starts from the position FP0, passes through the positions P1, P2, P3, and P4 determined as described above, and returns to the position FP0 as the movement path of the cutter 40. For example, linear interpolation or link interpolation may be used to determine the movement path. The positions P1, P2, P3, and P4 may be any positions on the top face of the material M. For example, the positions P1, P2, P3, and P4 may be positions near the center of the top face of the material M, positions closer to the edge in the longitudinal direction of the material M than the center, positions closer to the edge in the short direction of the material M than the center, or other positions.

The shape of the path (actual cut) connecting the positions P1, P2, P3, and P4 is the same or substantially the same shape as the path (a cut specified in advance) connecting the positions FP1, FP2, FP3, and FP4. For this reason, it can also be said that the cut program includes code for acquiring the distance from a path of a cut specified in advance to the surface of the material M, and code for determining a path separated from the path of a cut specified in advance by the acquired distance in the perpendicular direction as the actual cut.

Further, the cut program may include code for determining the movement path of the cutter 40 for making the cut in the material M. The code included in the cut program is not limited to the above-mentioned examples. For example, the cut program may include code for determining the position at which a line extending in the first direction from the position FP0 intersects with the top face of the material M as the position P1. Similarly, the cut program may include code for determining the position at which a line extending in the second direction, the third direction, or the fourth direction from the position FP0 intersects with the top face of the material M as the position P2, the position P3, or the position P4.

As another example, the cut program may include code for determining the movement path of the cutter 40 based only on the position of the material M, regardless of the shape of the material M. For example, it is not required that the movement path be dynamically determined, and the cut program may include code for causing the first robot 20A to move the cutter 40 along a movement path determined in advance. In this case, the data storage unit 100 is not required to store the recognition program. For example, the cut program may include code for determining a movement path for making a cut while pulling the cutter 40 out of the material M.

For example, the support program is a program which indicates a series of operations in which the robots 20 support the material M. As used herein, "support" also includes concepts such as grasping, fixing, sucking, and attraction. In this embodiment, the first robot 20A and the second robot 20B support the material M, and thus the data storage unit 100 stores a first support program for causing the first robot 20A to support the material M, and a second support program for causing the second robot 20B to support the material M.

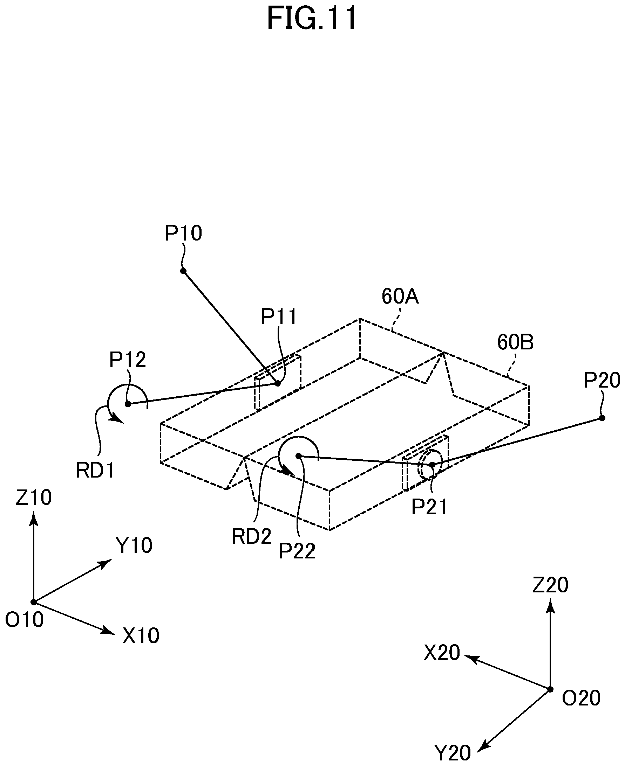

FIG. 11 is a diagram for illustrating an example of the movement paths for the first robot 20A and the second robot 20B to support the material M. For example, a position P10 is the initial position of the first robot 20A. The position P10 is determined in advance. The first support program includes code for determining a movement path from the position P10 to a position P11 of the connecting member 60A1 of the first support section 60A. The first support program includes code for causing the first robot 20A to connect the connecting member 50A to the connecting member 60A1 at the position P11 from the position P10. The first support program includes code for moving the first robot 20A from the position P11 to a predetermined position P12 above the container C.

For example, a position P20 is the initial position of the second robot 20B. The position P20 is determined in advance. The second support program includes code for determining a movement path from the position P20 to a position P21 of the connecting member 60B1 of the second support section 60B. The second support program includes code for causing the second robot 20B to connect the connecting member 50B to the connecting member 60B1 at the position P21 from the position P20. The second support program includes code for moving the second robot 20B from the position P21 to a predetermined position P22 above the container C.

The first support program may include code for identifying the position of the connecting member 60A1 of the first support section 60A based on photographed images, and aligning the connecting member 50A with the identified position. In this case, the camera 30 is still attached to the first robot 20A even after the cut in the material M is made. The second support program may include code for identifying the position of the connecting member 60B1 of the second support section 60B based on photographed images, and aligning the connecting member 50B with the identified position. In this case, the second robot 20B includes a camera 30 different from the camera 30 attached to the first robot 20A.

For example, the rotation program includes code for causing the robots 20 to rotate the material M. In this embodiment, the first robot 20A and the second robot 20B rotate the material M, and thus the data storage unit 100 stores a first rotation program for causing the first robot 20A to rotate the material M, and a second rotation program for causing the second robot 20B to rotate the material M.

For example, the first rotation program includes code indicating that the first robot 20A is to rotate by a predetermined angle in a predetermined rotation direction RD1 at the position P12. The second rotation program includes a rotation command indicating that the second robot 20B is to rotate by a predetermined angle in a predetermined rotation direction RD2 at the position P22. The rotation directions RD1 and RD2 are directions in which the cut of the material M faces downward. In other words, the rotation directions RD1 and RD2 are, of the material M, the directions in which the face in which the cut has been made (in this embodiment, the top face) faces downward.

The data stored by the data storage unit 100 is not limited to the above-mentioned example. For example, the data storage unit 100 may store other programs other than the recognition program, the cut program, the support program, and the rotation program. Further, the data stored by the data storage unit 100 is not limited to programs. For example, the data storage unit 100 may store movement path data indicating each movement path.

### [3-2. Cut Control Module]

The cut control module 101 causes the robots 20 to move at least one of the cutter 40 and the material M so that a cut is made in the material M with the cutter 40. The cut is a mark made when the material M is cut. As used in this embodiment, "cut" can also be referred to as "cutting place of the material M." The robots 20 are the subject which performs the act of making the cut. The cut may be made in any face of the material M as long as the cut is at a position at which it is difficult for the content to come out when the cut is made.

For example, the cut may be made in a face other than the bottom face of the material M. The cut may be made in the side face or the top face of the material M. In other words, the cut may be made in a direction other than directions having a downward orientation. As used herein, "bottom face," "side face," and "top face" mean the bottom face, the side face, and the top face, respectively, in a state in which the material M is placed on the first support section 60A and the second support section 60B. When the first support section 60A and the second support section 60B are not distinguished, those support sections are hereinafter simply referred to as "support sections 60." For example, the cut is made in a portion in which material M does not touch the support sections 60.

In this embodiment, the cut is made such that the cut faces upward. In this embodiment, the upward direction is the direction above the horizontal plane. The downward direction is a direction below the horizontal plane. In other words, the cut control module 101 causes the robots 20 to move at least one of the cutter 40 and the material M so that the material M is cut by the cutter 40 under a state in which the material M is supported by the support sections 60 (for example, a state in which the material M is placed on the support sections 60). In this case, the cut is the portion at which the material M does not touch the support sections 60.

In this embodiment, the first robot 20A holds the cutter 40, and thus the cut control module 101 causes the first robot 20A to move the cutter 40 so that the blade of the cutter 40 cuts the material M. For example, the cut control module 101 determines, based on the cut program, a movement path for making a cut in the material M with the cutter 40. The cut control module 101 controls the first robot 20A so that the cutter 40 moves along the movement path based on the cut program.

In this embodiment, a case in which the cut has the shape of the path connecting the positions P1, P2, P3, and P4 of FIG. 5 is given as an example, but the cut may have any shape. The cut may have the shape of a character, a symbol, a graphic, or a shape in which a part of those is omitted. For example, the cut may have the shape of a line segment or a polygon such as a triangle or a quadrilateral, or may have a shape in which a part of a line segment of a polygon is omitted, or may have the shape of a circle or have a shape in which a part of a circle is omitted, or may have a shape similar to a letter of the alphabet (for example, C, U, V, L, or X), or may have a shape similar to a character other than a letter of the alphabet, or may have a shape similar to a symbol other than a character, or may have another shape.

For example, the cut may be formed by at least one curved line. The cut may be formed by two linear cuts having at least a contact point. In this embodiment, it suffices that the cut forms an opening in the material M. The cut may be a line segment, a curve, or a combination of a line segment and a curve. For example, the opening formed by the cut may be determined in accordance with the size of the container C. For example, the opening may be smaller in size than the receptacle of the container C. The cut may be determined in accordance with the surface shape of the material M.

In this embodiment, the cut control module 101 includes a multi-cut control module 101A, an opening cut control module 101B, a graphic cut control module 101C, and a support-and-cut control module 101D. Code indicating the details of the control by each of the multi-cut control module 101A, the opening cut control module 101B, the graphic cut control module 101C, and the support-and-cut control module 101D is included in the cut program. The cut control module 101 may include none of, or include only a part of, the multi-cut control module 101A, the opening cut control module 101B, the graphic cut control module 101C, and the support-and-cut control module 101D.

### [Multi-cut Control Module]

The multi-cut control module 101A causes the robots 20 to move at least one of the cutter 40 and the material M so that a plurality of cuts are made in the material M with the cutter 40. In this embodiment, the first robot 20A holds the cutter 40, and thus the multi-cut control module 101A causes the first robot 20A to move the cutter 40 so that a plurality of cuts are made in the material M with the cutter 40.

For example, the multi-cut control module 101A causes the first robot 20A to move the cutter 40 so that a first cut is made by the cutter 40. The multi-cut control module 101A controls the robot 20A so that the first robot 20A pulls out the cutter 40 from the material M, and makes a second cut with the cutter 40 by making a notch with the cutter 40 at a position different from the first cut. Thereafter, the multi-cut control module 101A controls the robot 20A so that the first robot 20A pulls out the cutter 40 and makes a new cut until a predetermined number of cuts have been made in the material M.

In the example of FIG. 10, when a cut is to be made along the entire movement path connecting the positions P1, P2, P3, and P4, only one cut is made in the material M. However, it is acceptable that the cut is not made in a small portion of the movement path of FIG. 10. For example, the portion only near the position P2 may not be cut. In this case, the multi-cut control module 101A causes the first robot 20A to make the cut with the cutter 40 from the position P1 to the portion near the position P2.

Thereafter, the multi-cut control module 101A causes the first robot 20A to pull out the cutter 40 immediately before the position P2, and make a cut with the cutter 40 from immediately after the position P2 toward the position P3. The portion near the position P2 remains uncut. After the material M is rotated, the portion near the position P2 is severed by the weight of the content. In this way, a flap MF similar to that of FIG. 10 may be formed. As another example, the multi-cut control module 101A may control the first robot 20A so that a position other than the position P2 (for example, position P3) remains uncut.

As another example, the multi-cut control module 101A may control the first robot 20A so that a plurality of cuts are made with the cutter 40 in a predetermined direction. For example, the multi-cut control module 101A may control the first robot 20A so that a plurality of cuts are made with the cutter 40 in the longitudinal direction of the material M. Further, the multi-cut control module 101A may control the first robot 20A so that a plurality of cuts are made with the cutter 40 in the lateral direction of the material M. The multi-cut control module 101A may cause the first robot 20A to make a plurality of cuts with the cutter 40 so that a plurality of flaps MF similar to that of FIG. 5 are created.

The robot controller 10 is not required to include the multi-cut control module 101A. In this case, the cut control module 101 may cause the robots 20 to move at least one of the cutter 40 and the material M so that one cut is made in the material M with the cutter 40.

### [Opening Cut Control Module]

The opening cut control module 101B causes the robots 20 to move at least one of the cutter 40 and the material M so that a cut capable of forming a planar opening is made in the material M with the cutter 40. In this embodiment, the first robot 20A holds the cutter 40, and thus the opening cut control module 101B causes the first robot 20A to move the cutter 40 so that a cut capable of forming a planar opening is made in the material M with the cutter 40. In this embodiment, the portion exposed when the flap MF turns outward corresponds to the opening.

The opening is a hole in the surface of the material M. The outline of the opening is the same as the cut. Accordingly, like the shape of the cut, the shape of the opening may be any shape. The shape of the opening may be the same as the above-mentioned examples of the shape of the cut. In the example of FIG. 5, the opening is formed by the flap MF turning outward. When the robot controller 10 does not include the graphic cut control module 101C, which is described later, the opening cut control module 101B may cause the first robot 20A to make a cut capable of forming the opening by hollowing out a part of the material M with the cutter 40.

### [Graphic Cut Control Module]

The graphic cut control module 101C causes the robots 20 to move at least one of the cutter 40 and the material M so that a graphic drawn (formed) by the cut made in the material M becomes an open graphic. In this embodiment, the first robot 20A holds the cutter 40, and thus the graphic cut control module 101C causes the first robot 20A to move the cutter 40 so that the graphic drawn by the cut made in the material M becomes an open graphic.

The graphic drawn by the cut is the graphic indicated by the line forming the cut. In the example of FIG. 5, the graphic is a graphic indicated by the path connecting the positions P1, P2, P3, and P4. The graphic can also be referred to as a cutting path by the cutter 40. An open graphic is a graphic in which, of the material M, the portion bordered by the cut remains in the main portion of the material M. An open graphic can also be said to be a graphic in which the lines forming the graphic do not intersect with each other. An open graphic can also be said to be a graphic in which the material M is not hollowed out.

For example, the graphic cut control module 101C determines the movement path of the cutter 40 so as to create an open graphic. The graphic cut control module 101C causes the first robot 20A to move the cutter 40 along the movement path. In other words, the graphic cut control module 101C controls the first robot 20A so that the cutter 40 passes through different positions on the surface of the material M. The graphic cut control module 101C controls the first robot 20A so that the material M is prevented from becoming hollowed out by the cutter 40. The graphic cut control module 101C controls the first robot 20A so that the cutter 40 does not pass through the same position on the surface of the material M.

For example, the graphic cut control module 101C controls the first robot 20A so that a cut capable of forming a flap-shaped opening is made with the cutter 40 in the material M. The flap-shaped opening is a portion of the material M that can be opened and closed by the flap MF. The graphic cut control module 101C controls the first robot 20A so that a cut capable of forming a valve-shaped opening is made with the cutter 40 in the material M. The graphic cut control module 101C controls the first robot 20A so that a cut that allows a part of the material M to open and close is made with the cutter 40.

### [Support-and-Cut Control Module]

The support-and-cut control module 101D controls the robots 20 so that the cut is made by the cutter 40 in the material M placed on the support sections 60 supporting the material M from below. In this embodiment, the first robot 20A holds the cutter 40, and thus the support-and-cut control module 101D causes the first robot 20A to move the cutter 40 so that the cut is made by the cutter 40 in the material M placed on the support sections 60 supporting the material M from below.

In this embodiment, a case in which a worker places material M on the support sections 60 is given as an example, but the first robot 20A, the second robot 20B, or another robot may place the material M on the support sections 60. The support sections 60 on which the material M is placed may be conveyed onto a work table T. In this case as well, a worker, the first robot 20A, the second robot 20B, or another robot may convey the support sections 60 onto the work table T.

In this embodiment, the material M is placed on the first support section 60A and the second support section 60B, and hence the support-and-cut control module 101D causes the first robot 20A to move the cutter 40 so that a cut is made with the cutter 40 in the material M placed on the first support section 60A and the second support section 60B. This is different from the matters already described above in terms of the point that the material M is placed on the first support section 60A and the second support section 60B, but the control itself for making the cut is the same as the matters already described above.

Each of the first support section 60A and the second support section 60B may start sucking the material M before the cut is made in the material M. Suction is turned on/off based on control by the robot controller 10 or another device. The suction of the material M may be turned on/off at any timing. For example, the suction of the material M may be turned off while the cut is being made in the material M. Suction may then be turned on when the material M is supported by the support control module 102, which is described below.

### [3-3. Support Control Module]

The support control module 102 causes the robots 20 to support the material M. In this embodiment, a case in which the support control module 102 causes the robots 20 to support the material M by using a suction device is given as an example. The support control module 102 may cause the robots 20 to support the material M by a method other than suction. For example, the support control module 102 may cause the robots 20 to support the material M by using magnetic force or electrostatic force. The support control module 102 may cause the robots 20 to support the material M by gripping the material M with a robot hand. The support control module 102 determines the movement path for the robots 20 to support the material M based on the support program. The support control module 102 causes the robots 20 to move along the movement path.

The support control module 102 causes the first robot 20A to support the material M. The support control module 102 determines the movement path for the first robot 20A to support the material M based on the first support program. The support control module 102 causes the first robot 20A to support the material M by moving the first robot 20A along the movement path. When an operation other than movement is required to support the material M, code indicating the operation is also included in the first support program. For example, the operation is an operation such as turning on the suction device.

In this embodiment, the support control module 102 determines the movement path of the first robot 20A so that the connecting member 50A of the first robot 20A is connected to the connecting member 60A1 of the first support section 60A. The support control module 102 causes the first robot 20A to move along the movement path. The support control module 102 causes the first robot 20A to connect the connecting member 50A and the connecting member 60A1. After the connecting member 50A and the connecting member 60A1 are connected, the support control module 102 causes the first robot 20A to move the first support section 60A on which the material M is placed. The code of the first support program for this series of controls is as described above.

The support control module 102 causes the second robot 20B to support the material M in cooperation with the first robot 20A. As used herein, "in cooperation with" means aligning with the operations of another robot. For example, the second robot 20B moving while maintaining a predetermined positional relationship with the first robot 20A corresponds to "in cooperation with." The second robot 20B moving in the same direction as the first robot 20A corresponds to "in cooperation with." The second robot 20B performing the same operation as the first robot 20A (for example, moving in the same direction and at the same speed) corresponds to "in cooperation with." The second robot 20B working on the same material M as the first robot 20A corresponds to "in cooperation with."

In this embodiment, the support control module 102 determines the movement path for the second robot 20B to support the material M based on the second support program. The support control module 102 causes the second robot 20B to support the material M by moving the second robot 20B along the movement path. When an operation other than movement is required to support the material M, code indicating the operation is also included in the second support program. For example, the operation is an operation such as turning on the suction device.

In this embodiment, the support control module 102 determines the movement path of the second robot 20B so that the connecting member 50B of the second robot 20B is connected to the connecting member 60B1 of the second support section 60B. The support control module 102 causes the second robot 20B to move along the movement path. The support control module 102 causes the second robot 20B to connect the connecting member 50B and the connecting member 60B1. After the connecting member 50B and the connecting member 60B1 are connected, the support control module 102 causes the second robot 20B to move the second support section 60B on which the material M is placed. The code of the second support program for this series of controls is as described above.

The support control module 102 causes the robots 20 connected to the support sections 60 to support the material M. The support control module 102 determines the movement path for the robots 20 to connect to the support sections 60 based on the support program. The support control module 102 causes the robots 20 to move along the movement path. The support control module 102 causes the robots 20 to connect the connecting members 50A and 50B and the connecting members 60A1 and 60B1. After the connecting members 50A and 50B and the connecting members 60A1 and 60B1 are connected, the support control module 102 causes the robots 20 to move the support sections 60 on which the material M is placed. The support program code for this series of controls is as described above. The support sections 60 are not required to be divided into two like the first support section 60A and the second support section 60B. The support control module 102 may cause one robot 20 to support the material M placed on one support section 60.

### [3-4. Rotation Control Module]

The rotation control module 103 causes the robots 20 to rotate the material M so that the cut faces downward. For example, the rotation control module 103 causes the robot 20 to rotate the material M so that a surface in which the cut has been made on the material M faces downward. In this embodiment, under the control of the support control module 102, the material M is supported and conveyed under a state in which at least a part of the cut is facing in a direction other than downward. The rotation control module 103 causes the robots 20 to rotate, based on the rotation program, the material M from the state in which at least a part of the cut is facing the direction other than downward to a state in which at least a part of the cut faces downward. The material M is rotated by the rotation of a motor arranged at the tip of the robots 20.

For example, the rotation control module 103 includes a first rotation control module 103A, a second rotation control module 103B, and a direction rotation control module 103C. Code indicating the details of the control by each of the first rotation control module 103A, the second rotation control module 103B, and the direction rotation control module 103C is included in the rotation program. The rotation control module 103 may include none of, or include only a part of, the first rotation control module 103A, the second rotation control module 103B, and the direction rotation control module 103C.

### [First Rotation Control Module]

The first rotation control module 103A causes the first robot 20A to rotate the material M so that the cut faces downward. The first rotation control module 103A determines a rotation direction of the first robot 20A supporting the material M based on the first rotation program. The rotation direction is the direction in which at least part of the cut of the material M changes from a state in which the at least part of the cut of the material M is facing in a direction other than downward to a state in which the at least a part of the cut faces downward. The first rotation control module 103A rotates the material M so that the cut faces downward by rotating the motor at the tip of the first robot 20A based on the rotation direction.

### [Second Rotation Control Module]

The second rotation control module 103B causes the second robot 20B to rotate the material M in cooperation with the first robot 20A so that the cut faces downward. The second rotation control module 103B determines a rotation direction of the second robot 20B supporting the material M based on the second rotation program. The rotation direction is the direction in which at least part of the cut of the material M changes from a state in which the at least part of the cut of the material M is facing in a direction other than downward to a state in which the at least a part of the cut faces downward. The second rotation control module 103B rotates the material M so that the cut faces downward by rotating the motor at the tip of the second robot 20B based on the rotation direction.

### [Direction Rotation Control Module]

The direction rotation control module 103C causes the robots 20 to rotate the material M so that the flap MF created by the formation of the opening is turned upward. When the flap MF is turned upward, this means that, of the face on which the flap MF is provided in the material M (in FIG. 5, the top face), the portion other than the flap MF faces downward. The direction rotation control module 103C determines, based on the rotation program, the rotation direction in which the flap is turned upward. In the rotation direction, of the face on which the flap MF is provided in the material M (in FIG. 5, the top face), the portion other than the flap MF faces downward. The direction rotation control module 103C rotates the material M so that the flap MF is turned upward by rotating the motor at the tip of the robots 20 based on the rotation direction.

### [4. Processing executed by Robot Control System 1]

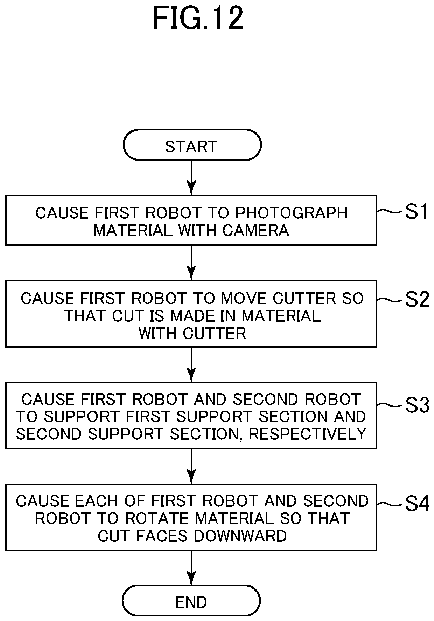

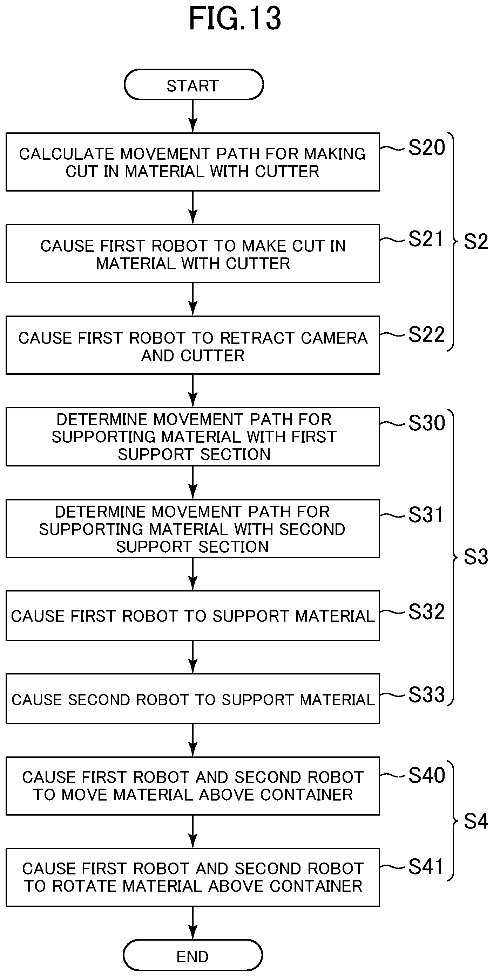

FIG. 12 is a flowchart for illustrating an example of processing executed by the robot control system 1. When the CPU 11 executes programs stored in the storage unit 12, the processing of FIG. 12 is executed. The processing of FIG. 12 is executed after material M is placed on the first support section 60A and the second support section 60B. In FIG. 12, an overview of the processing executed by the robot control system 1 is illustrated. Details of the processing are illustrated in FIG. 13.

As illustrated in FIG. 12, the robot controller 10 causes the first robot 20A to photograph the material M with the camera 30 based on the recognition program (Step S1) . The robot controller 10 causes the first robot 20A to move the cutter 40 so that a cut is made in the material M with the cutter 40 based on the cut program (Step S2). The robot controller 10 causes the first robot 20A and the second robot 20B to support the first support section 60A and the second support section 60B, respectively, based on the support program (Step S3). Based on the rotation program, the robot controller 10 causes each of the first robot 20A and the second robot 20B to convey the material M, and causes each of the first robot 20A and the second robot 20B to rotate the material M so that the cut faces downward (Step S4). Then, the processing ends.

FIG. 13 is a flowchart for illustrating an example of the details of the processing steps of Step S2 to Step S4. The processing steps of Step S20 to Step S22 are the details of the processing step of Step S2. The processing steps of Step S30 to Step S33 are the details of the processing step of Step S3. The processing steps of Step S40 and Step S41 are the details of the processing step of Step S4.

As illustrated in FIG. 13, the robot controller 10 calculates, based on the position and the shape of the material M recognized in Step S2 and the cut program, a movement path for the first robot 20A to make a cut in the material M with the cutter 40 (Step S20) . The robot controller 10 causes the first robot 20A to make a cut in the material M with the cutter 40 based on the movement path calculated in Step S20 (Step S21). The robot controller 10 causes the first robot 20A to retract the camera 30 and the cutter 40 (Step S22) .

The robot controller 10 determines a movement path for the first robot 20A to support the material M with the first support section 60A based on the first support program (Step S30). The robot controller 10 determines a movement path for the second robot 20B to support the material M with the second support section 60B based on the second support program (Step S31). The robot controller 10 causes the first robot 20A to support the material M based on the movement path determined in Step S30 (Step S32). The robot controller 10 causes the second robot 20B to support the material M based on the movement path determined in Step S31 (Step S33).

The robot controller 10 causes the first robot 20A and the second robot 20B to move the material M to a position above the container C based on the movement paths determined in Step S30 and Step S31 (Step S40). The robot controller 10 causes, based on the first rotation program and the second rotation program, the first robot 20A and the second robot 20B to rotate the material M above the container C so that the cut faces downward (Step S41), and the processing ends.

### [5. Summary of Embodiment]

The robot control system 1 of this embodiment includes one or more robots 20 which perform work on a material M that includes content. The robot control system 1 causes the robots 20 to move at least one of a cutter 40 and the material M so that a cut is made in the material M with the cutter 40. The robot control system 1 causes the robots 20 to support the material M. The robot control system 1 causes the robots 20 to rotate the material M so that the cut faces downward. At the moment when the cut is made by the cutter 40, the cut is facing in a direction other than downward, and after that, the material M is rotated so that the cut faces downward, and hence it is more difficult for the content to come out until the material M is rotated. As a result, the robot control system 1 can prevent the content from adhering to at least one of the cutter and the robots. For example, in the related-art technology as disclosed in Japanese Patent Application Laid-open No. Hei 7-081870, immediately after the cutter cuts the bottom face of the bag, the content tends to come out and adhere to the cutter, for example. Compared with the related-art technology, the robot control system 1 of this embodiment can prevent the content from adhering to the cutter 40, for example, because at the moment when the cutter 40 makes the cut, the cut is facing in a direction other than downward, making it more difficult for the content to come out.

Further, the robot control system 1 causes the first robot 20A to rotate the material M so that the cut faces downward. The robot control system 1 causes the second robot 20B to rotate the material M in cooperation with the first robot 20A so that the cut faces downward. The robot control system 1 can support and rotate the material M in a stable state by using two robots 20. For example, it is possible to prevent the material M from falling during the rotation of the material M.

Further, the robot control system 1 causes the robots 20 to move at least one of the cutter 40 and the material M so that a plurality of cuts are made in the material M with the cutter 40. As a result of making a plurality of cuts in the material M, the robot control system 1 can easily discharge the content.

Further, the robot control system 1 causes the robots 20 to move at least one of the cutter 40 and the material M so that a cut capable of forming a planar opening is made in the material M with the cutter 40. As a result of making the cut forming the planar opening, the robot control system 1 can easily discharge the content.

Further, the robot control system 1 causes the robots 20 to move at least one of the cutter 40 and the material M so that a graphic drawn by the cut made in the material M becomes an open graphic. The robot control system 1 can prevent a part of the material M from falling along with the content. For example, the robot control system 1 can prevent a part of the material M from becoming mixed into the content transferred to the container C.

Further, the robot control system 1 causes the robots 20 to rotate the material M so that the flap FP created by the formation of an opening is turned upward. Through rotating the material M to an orientation in which the flap FP is turned upward, the content of the material M can be easily discharged. For example, when the flap FP turns over in the opposite direction (downward), there is a possibility that the material M may not be able to withstand the weight and tear, but the robot control system 1 can prevent the material M from tearing because the flap FP turns upward.

Further, the robot control system 1 controls the robots 20 so that the cut is made by the cutter 40 in the material M placed on the support sections 60 supporting the material M from below. The robot control system 1 causes the robots 20 connected to the support sections 60 to support the material M. The robot control system 1 can smoothly perform the processes after the cut is made by making the cut in the material M in a state in which the material M is placed on the support sections 60, and causing the robots connected to the support sections 60 to support the material M. For example, the robot control system 1 can handle various types of the material M without preparing a dedicated robot hand for a specific material M, and hence the robot control system 1 has high versatility.

### [6. Modification Examples]

The present disclosure is not limited to the embodiment described above. The present disclosure can be modified suitably without departing from the spirit of the present disclosure.

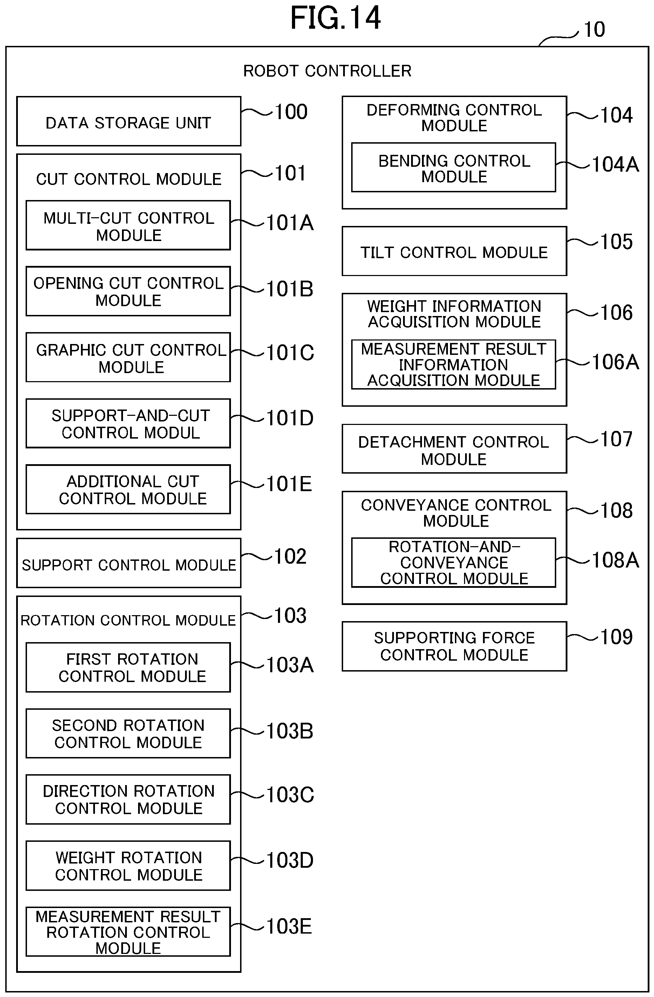

FIG. 14 is a diagram for illustrating an example of functions implemented by the robot control system 1 according to modification examples of the present disclosure. For example, the robot controller 10 includes a deforming control module 104, a tilt control module 105, a weight information acquisition module 106, a detachment control module 107, a conveyance control module 108, and a supporting force control module 109. Each of those functions is implemented by the CPU 11.

### [6-1. Modification Example 1]

For example, when the material M is rotated so that the cut faces downward as in the case in the embodiment, not all the content may come out of the opening. Even when the material M is rotated until the cut faces directly downward, some of the content may remain in the material M. Thus, the robot controller 10 may cause the first robot 20A and the second robot 20B to deform the material M so that the content remaining in the material M is discharged.

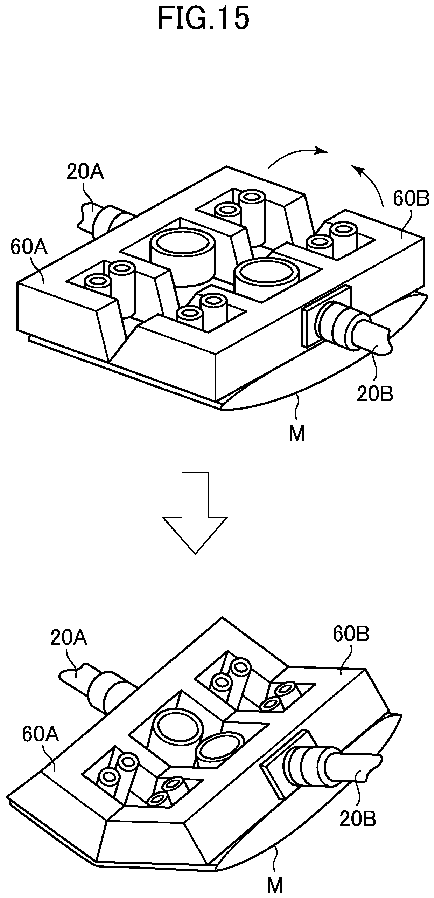

FIG. 15 is a diagram for illustrating an example of how the material M is deformed in Modification Example 1. In the example of FIG. 15, a state in which the cut of the material M has changed from the state of FIG. 7 to a state in which the cut faces directly downward is illustrated. In Modification Example 1, after the cut of the material M faces downward, the robot controller 10 controls the first robot 20A and the second robot 20B so that, with respect to the portion at which the first support section 60A and the second support section 60B touch each other, of the first support section 60A, the face opposite to the face supporting the material M (that is, the back side of the first support section 60A) and, of the second support section 60B, the face opposite to the face (that is, the back side of the second support section 60B) supporting the material M are rotated in opposite directions and brought closer to each other. As a result, the face of the material M touching the first support section 60A and the face of the material M touching the second support section 60B are deformed so as to be bent.

The robot control system 1 of Modification Example 1 includes the deforming control module 104. The deforming control module 104 controls the robots 20 supporting the material M so that the material M deforms when the material M is rotated or after the material M is rotated. As used herein, "the material M deforms" means that the shape of the surface of the material M changes. The data storage unit 100 in Modification Example 1 stores a deforming program for causing the material M to deform. The deforming program includes code indicating the control that is described later. The deforming control module 104 controls the robots 20 so that the material M is deformed based on execution of the deforming program.

In Modification Example 1, like in the embodiment, each of the first robot 20A and the second robot 20B supports the material M, and hence the data storage unit 100 stores a first deforming program for causing the first robot 20A to deform the material M and a second deforming program for causing the second robot 20B to deform the material M. The first deforming program includes code indicating control by the first robot 20A, which is described later. The second deforming program includes code indicating control by the second robot 20B, which is described later. The deforming control module 104 controls each of the first robot 20A and the second robot 20B so that the material M is deformed based on execution of the first deforming program and the second deforming program.

As used herein, "when the material M is rotated" refers to the period from when the material M starts rotating until when the material M finishes rotating (the period during which the material M is rotating). That is, the period during which the control by the rotation control module 103 is executed corresponds to "when the material M is rotated." As used herein, "after the material M is rotated" refers to after the material M has finished rotating (after the rotation of the material M has stopped). That is, after the control by the rotation control module 103 is executed corresponds to "after the material M is rotated."

The deforming control module 104 in Modification Example 1 includes a bending control module 104A. The bending control module 104A controls the robots 20 supporting the material M so that the material M is bent when the material M is rotated or after the material M is rotated. In Modification Example 1, each of the first robot 20A and the second robot 20B supports the material M, and hence the bending control module 104A controls each of the first robot 20A and the second robot 20B so that the material M is bent when the material M is rotated or after the material M is rotated.

In the example of FIG. 15, the bending control module 104A controls each of the first robot 20A and the second robot 20B so that, of the material M, the face which is touching the first fixing section 60A and the second fixing section 60B is bent. For example, the bending control module 104A controls the first robot 20A so that the first fixing section 60A is rotated toward the second fixing section 60B, and controls the second robot 20B so that the second fixing section 60B is rotated toward the first fixing section 60A.

In other words, the bending control module 104A causes each of the first robot 20A and the second robot 20B to rotate each of the first fixing section 60A and the second fixing section 60B so that, with respect to the portion at which the first fixing section 60A and the second fixing section 60B touch each other, the ends of each of the first fixing section 60A and the second fixing section 60B are bent upward. It is assumed that each of the first support section 60A and the second support section 60B has a notch so that the material M can be bent.

For example, the bending control module 104A may control the first robot 20A so that the first fixing section 60A is rotated toward the second fixing section 60B, and then control the second robot 20B so that the second fixing section 60B is rotated toward the first fixing section 60A. The bending control module 104A may control the second robot 20B so that the second fixing section 60B is rotated toward the first fixing section 60A, and then control the first robot 20A so that the first fixing section 60A is rotated toward the second fixing section 60B. Moreover, the bending control module 104A may control the first robot 20A and the second robot 20B so that the material M is bent in the opposite direction to that illustrated in FIG. 15.

In Modification Example 1, a case in which bending the material M corresponds to deforming the material M is given as an example, but it suffices that the deforming control module 104 controls each of the first robot 20A and the second robot 20B so that the surface shape of the material M is changed. For example, when the material M is shaken, the surface of the material M deforms, and hence the deforming control module 104 may deform the material M by controlling each of the first robot 20A and the second robot 20B so that each of the first robot 20A and the second robot 20B shakes the material M while supporting the material M.

For example, in a case in which the first robot 20A supports a side face of the material M with the first support section 60A, and the second robot 20B supports the opposite side face of the material M with the second support section 60B, in this case, the deforming control module 104 may deform the material M by moving each of the first robot 20A and the second robot 20B so that the first support section 60A and the second support section 60B are brought closer to each other. In this case, the material M is sandwiched in the horizontal direction by the first support section 60A and the second support section 60B, and deforms so as to be crushed from both sides in the horizontal direction.

For example, in a case in which the first robot 20A supports the top face of the material M with the first support section 60A, and the second robot 20B supports the bottom face of the material M with the second support section 60B, in this case, the deforming control module 104 may deform the material M by moving each of the first robot 20A and the second robot 20B so that the first support section 60A and the second support section 60B are brought closer to each other. In this case, the material M is sandwiched in an up-and-down direction by the first support section 60A and the second support section 60B, and deforms so as to be crushed from both sides in the vertical direction.

For example, instead of bending the material M, the deforming control module 104 may control each of the first robot 20A and the second robot 20B so that the material M is twisted (squeezed). For example, the deforming control module 104 may twist the material M by causing each of the first robot 20A and the second robot 20B to rotate the material M in opposite directions to each other while supporting the material M. When the deforming control module 104 twists the material M in this manner, the content remaining inside the material M may come out.

In Modification Example 1, the material M may be supported by one robot 20. In this case, the deforming control module 104 may control the one robot 20 so that the material M is deformed. For example, the deforming control module 104 may control the one robot 20 so that the one robot 20 shakes the material M. When the one robot 20 includes a plurality of end effectors, the deforming control module 104 may deform the material M by changing at least one of the position and the orientation of each of the plurality of end effectors of the one robot 20.

The robot control system 1 of Modification Example 1 controls the robot (s) 20 supporting the material M so that the material M is deformed when the material M is rotated or after the material M is rotated. As a result of deforming the material M, the robot control system 1 can easily discharge the content. For example, even when a part of the content remains in the material M, deforming the material M makes it easier for that part to come out.

Further, the robot control system 1 controls the robot(s) 20 supporting the material M so that the material M is bent when the material M is rotated or after the material M is rotated. As a result of bending the material M, the robot control system 1 can easily discharge the content. For example, even when a part of the content remains in the material M, bending the material M makes it easier for that part to come out.

### [6-2. Modification Example 2]

For example, the method of discharging the content remaining in the material M is not limited to deforming the material M like in Modification Example 1. The robot controller 10 may discharge the content remaining in the material M by causing the first robot 20A and the second robot 20B to tilt the material M. As used herein, tilting of the material M means that the orientation (posture) of the material M is changed.

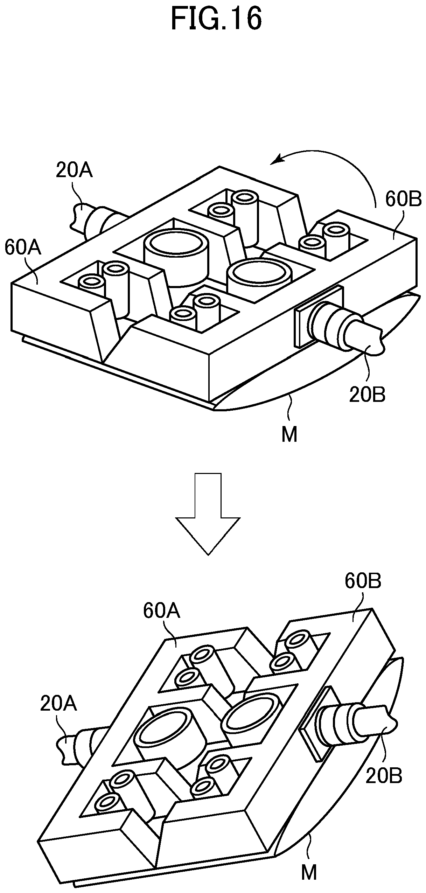

FIG. 16 is a diagram for illustrating an example of how the material M is tilted in Modification Example 2. In Modification Example 2, after the cut of the material M faces downward, the robot controller 10 controls each of the first robot 20A and the second robot 20B so that the first support section 60A and the second support section 60B are rotated in a predetermined direction about a portion at which the first support section 60A and the second support section 60B are touching as a rotation axis. Then, the robot controller 10 may control each of the first robot 20A and the second robot 20B so that the first support section 60A and the second support section 60B are rotated in the opposite direction. The robot controller 10 may repeat those rotational controls.

The robot control system 1 of Modification Example 2 includes the tilt control module 105. The tilt control module 105 controls the robots 20 supporting the material M so that the material M is tilted in another direction different from the direction of rotation by the rotation control module 103. The another direction may be any direction other than the direction in which the material M is rotated by the rotation control module 103. In the example of FIG. 16, the another direction is a direction orthogonal to the direction in which the material M is rotated. In other words, the another direction is the direction in which the first robot 20A is located with respect to the material M, the direction in which the second robot 20B is located with respect to the material M, or another direction.

The data storage unit 100 in Modification Example 2 stores a tilt program for causing the robots 20 to tilt the material M in the another direction. The tilt program includes code for moving or rotating the robots 20 in the another direction. The tilt control module 105 causes the robots 20 to tilt the material M by moving or rotating the robots 20 in the another direction based on execution of the tilt program.

In Modification Example 2, like in the embodiment, each of the first robot 20A and the second robot 20B supports the material M, and hence the data storage unit 100 stores a first tilt program for causing the first robot 20A to tilt the material M and a second tilt program for causing the second robot 20B to tilt the material M. The tilt control module 105 causes the first robot 20A to tilt the material M by moving or rotating the first robot 20A in the another direction based on execution of the first tilt program. The tilt control module 105 causes the second robot 20B to tilt the material M by moving or rotating the second robot 20B in the another direction based on execution of the second tilt program.

The robot control system 1 of Modification Example 2 controls the robots 20 supporting the material M so that the material M is tilted in another direction different from the direction of rotation by the rotation control module 103. The robot control system 1 makes it easier to discharge the content by tilting the material M in another direction different from the direction of rotation for causing the cut to face downward. For example, even when a part of the content remains in the material M, by tilting the material M, it is easier for that part to come out.

### [6-3. Modification Example 3]

For example, when the material M is heavy, the content may easily become unevenly distributed when the material M is rotated. In this case, when the material M is rotated, the center of gravity of the material M changes rapidly, and the material M tends to fall from the first support section 60A and the second support section 60B. For this reason, rotation in accordance with the weight of the material M may be performed.

The robot control system 1 of Modification Example 3 includes the weight information acquisition module 106. The weight information acquisition module 106 acquires weight information on the weight of the material M. The weight information may be any information which is somehow related to the weight of the material M. The weight information may be information which directly indicates the weight of the material M (for example, a numerical value indicating the weight itself), or may be information from which the weight of the material M can be estimated. The information from which the weight of the material M can be estimated is information which has an indirect relationship with the weight, and may be, for example, a detection result obtained by a force sensor, a torque sensor, or another sensor.

In Modification Example 3, a case in which the weight information is a torque waveform detected by a torque sensor is given as an example. For example, each of the first robot 20A and the second robot 20B includes a torque sensor which detects the torque relating to a motor in the robot. The weight information acquisition module 106 acquires the torque waveform detected by the torque sensor of each of the first robot 20A and the second robot 20B as weight information. For example, when the material M is heavier, the torque value indicated by the torque waveform is higher, and when the material M is lighter, the torque value indicated by the torque waveform is lower.

The rotation control module 103 in Modification Example 3 includes a weight rotation control module 103D. The weight rotation control module 103D causes the robots 20 to rotate the material M based on the weight information. For example, the weight rotation control module 103D controls the rotation of the robots 20 so that when the weight indicated by the weight information is heavier, the rotation speed of the material M becomes slower. The weight rotation control module 103D controls the rotation of the robots 20 so that when the weight indicated by the weight information is lighter, the rotation speed of the material M becomes faster. The weight rotation control module 103D may control the rotation direction of the material M, instead of the rotation speed of the material M, based on the weight information.

The robot control system 1 of Modification Example 3 acquires weight information on the weight of the material M. The robot control system 1 causes the robots 20 to rotate the material M based on the weight information. The robot control system 1 can rotate the material M in accordance with the weight information on the weight of the material M. For example, when the material M is rotated, the content in the material M may move, causing the center of gravity to change or the shape of the material M to change. In this respect, by rotating in accordance with the weight information, it is possible to prevent the center of gravity or the shape from changing rapidly, and hence the material M is less likely to fall.

### [6-4. Modification Example 4]

In Modification Example 3, a case in which a torque waveform detected by a torque sensor corresponds to weight information is given as an example, but the weight information is not limited to the example of Modification Example 3. For example, when the container C includes a measuring unit, weight information may be acquired by using the measuring unit of the container C. In Modification Example 4, a case in which measurement result information on a measurement result obtained by a measuring unit corresponds to the weight information in Modification Example 3 is given as an example.

The weight information acquisition module 106 in Modification Example 4 includes a measurement result information acquisition module 106A. The measurement result information acquisition module 106A acquires measurement result information on a measurement result obtained by a measuring unit of the container C to which the content is transferred. The measuring unit is a weight scale. The measuring unit may be of any one of an analog type or a digital type. The robot controller 10 of Modification Example 4 is connected to the measuring unit of the container C. The connection between the robot controller 10 and the measuring unit of the container C may be any one of wired connection or wireless connection.

For example, the weight information acquisition module 106 acquires measurement result information indicating the weight of the content put into the container C. The weight is the total weight of the content at the time the measurement is performed by the measuring unit. Accordingly, the weight may not indicate the weight of the content of one material M. In a case in which the content of each of a plurality of materials M have been put into the container C in the past, the measurement result information indicates the total weight of the content of each of the plurality of materials M. The weight of the content most recently transferred from the material M to the container C is a value obtained by subtracting the weight measured the first time from the weight measured this time. When the weight of the content most recently transferred from the material M to the container C is lighter, the material M becomes heavier because less content has been discharged from the material M. When the weight of the content most recently transferred from the material M to the container C is heavier, the material M becomes lighter because more content has been discharged from the material M. The measurement result information may indicate the weight of the content discharged from a certain one material M.

The rotation control module 103 in Modification Example 4 includes a measurement result rotation control module 103E. The measurement result rotation control module 103E causes the robots 20 to rotate the material M based on the measurement result information. For example, the measurement result rotation control module 103E controls the rotation of the robots 20 so that when the weight of the content most recently transferred from the material M to the container C calculated from the weight information is lighter, the rotation speed of the material M becomes slower. As another example, the measurement result rotation control module 103E controls the rotation of the robots 20 so that when the weight of the content most recently transferred from the material M to the container C calculated from the weight information is heavier, the rotation speed of the material M becomes faster. The measurement result rotation control module 103E may control the rotation direction of the material M, instead of the rotation speed of the material M, based on the weight information.

The robot control system 1 of Modification Example 4 acquires measurement result information on the measurement result obtained by the measuring unit of the container to which the content is transferred. The robot control system 1 causes the robots 20 to rotate the material M based on the measurement result information. The robot control system 1 can rotate the material M based on the measurement result information on the measurement result obtained by the measuring unit. For example, the material M is less likely to fall from the robots 20. The measuring unit is not required to be attached to the robots 20.

### [6-5. Modification Example 5]

For example, when the robot controller 10 has almost finished discharging the content from the material M, the material M may be moved to a predetermined place. The predetermined place may be a place at which a box for discarding the used material M is placed. In this case, when the first robot 20A and the second robot 20B each support the material M, the first robot 20A and the second robot 20B may interfere with each other and make it difficult to move the material M. A material M from which the content has been discharged is much lighter than before the content is discharged from the material M, and hence the material M may be moved by using only any one of the first robot 20A or the second robot 20B.

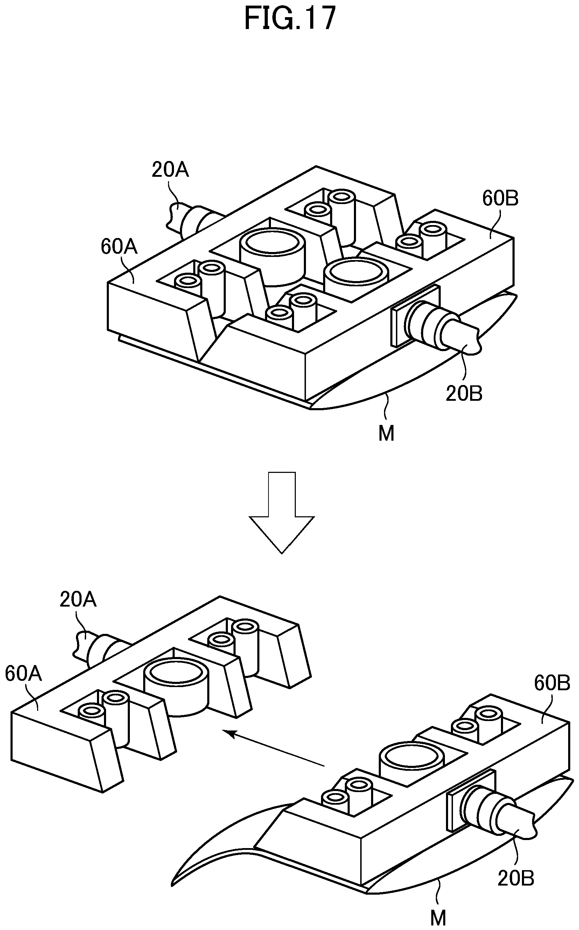

FIG. 17 is a diagram for illustrating an example of how the material M is moved in Modification Example 5. The robot control system 1 of Modification Example 5 includes the detachment control module 107 and the conveyance control module 108. The detachment control module 107 detaches any one of the robots 20, that is, the first robot 20A or the second robot 20B, from the material M after the material M is rotated and at least a part of the content is discharged from the material M. In the example of FIG. 17, there is illustrated a case in which the first robot 20A is detached, but the second robot 20B may be detached. As used herein, "detach from the material M" means to move away from the material M.

The data storage unit 100 in Modification Example 5 stores a detachment program indicating a detachment operation. For example, the detachment program includes code indicating that the suction by the suction device is to be stopped, and code indicating that the first robot 20A is to move in a direction away from the material M. The detachment control module 107 executes the detachment program to stop the suction by the suction device of the first support section 60A. The detachment control module 107 executes the detachment program to move the first robot 20A in a direction away from the material M. As a result, the detachment of the first robot 20A is complete.

The conveyance control module 108 causes, of the first robot 20A and the second robot 20B, the robot 20 different from the detached robot 20 to convey the material M. In the example of FIG. 17, the first robot 20A is detached from the material M, and thus the second robot 20B corresponds to the different robot 20. When the second robot 20B is detached from the material M, the first robot 20A corresponds to the different robot 20.

The data storage unit 100 in Modification Example 5 stores a conveyance program indicating a conveyance operation. For example, the conveyance program includes code for calculating the movement path of the material M to a predetermined place being a conveyance destination. The conveyance control module 108 executes the conveyance program to calculate a movement path from the current position of the second robot 20B supporting the material M to a predetermined place, which is the conveyance destination of the material M. The conveyance control module 108 controls the second robot 20B so that the second robot 20B moves along the calculated movement path.

The robot control system 1 of Modification Example 5 detaches any one of the robots 20, that is, the first robot 20A or the second robot 20B, from the material M after the material M is rotated and at least a part of the content is discharged from the material M. The robot control system 1 causes, of the first robot 20A and the second robot 20B, the robot 20 different from the detached robot 20 to convey the material M. The robot control system 1 can easily convey the material M after the content is discharged. For example, the robot control system 1 can more easily convey the material M because the first robot 20A and the second robot 20B are less likely to interfere with each other than when the first robot 20A and the second robot 20B convey the material M together.

### [6-6. Modification Example 6]

For example, in Modification Example 5, when the material M is moved from the container C to the predetermined place with the cut facing downward, the material M is moved under a state in which the flap MF is turned outward and the opening is exposed. As a result, while the material M is being moved, the content may spill onto the floor, for example. Thus, the robot controller 10 may control the second robot 20B so that the material M is moved to the predetermined place after the material M has been rotated so that at least a portion of the cut faces upward. For example, the robot controller 10 controls the second robot 20B to rotate the material M so that a surface in which the cut has been made on the material M faces upward.

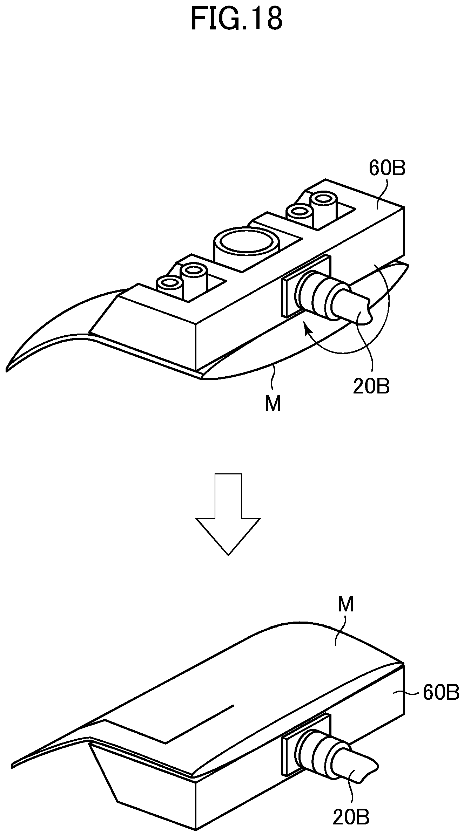

FIG. 18 is a diagram for illustrating an example of how the material M is moved in Modification Example 6. The robot control system 1 of Modification Example 6 includes a rotation-and-conveyance control module 108A. The rotation-and-conveyance control module 108A causes the different robot 20 to rotate the material M so that at least a part of the cut faces upward, and then convey the material M. In FIG. 18, all of the cut is facing upward, but only a part of the cut may be facing upward.

The conveyance program in Modification Example 6 includes code for rotating the second robot 20B supporting the material M. The rotation-and-conveyance control module 108A executes the conveyance program to cause the second robot 20B to rotate the material M so that at least a part of the cut faces upward before the material M is conveyed. The rotation-and-conveyance control module 108A executes the conveyance program to control the second robot 20B so that the material M in a state in which at least a part of the cut is facing upward is moved to the predetermined place.

The robot control system 1 of Modification Example 6 causes the second robot 20B to rotate the material M so that at least a part of the cut faces upward, and then convey the material M. The robot control system 1 can make it more difficult for the content that has not been discharged from the material M to fall out during conveyance of the material M.

### [6-7. Modification Example 7]

For example, in the embodiment, the material M placed on the first fixing section 60A and the second fixing section 60B is rotated, and the content gradually come out of the material M. In a state in which the cut is facing downward, most of the content of the material M come out, and hence it is not required to support the material M on the first fixing section 60A and the second fixing section 60B with such a strong force as to support the material M in the downward direction when all the content is included. As a result, the material M may be supported with a force weaker than the force for supporting the material M in the downward direction when all the content is included.

The robot control system 1 of Modification Example 7 includes the supporting force control module 109. The supporting force control module 109 causes the robots 20 to support the material M with a supporting force based on the force for the robot 20 to support the material M in the downward direction. When the material M is supported by a suction device like in the embodiment, the supporting force is the suction force. When material M is supported by a magnetic force or an electrostatic force, the supporting force is the strength of the magnetic force or the electrostatic force. When the material M is supported by physical gripping, the supporting force is the gripping force.

In Modification Example 7, the supporting force is assumed to be defined in the support program. The supporting force may be a parameter referred to by the supporting program. For example, the supporting force defined in the support program is a force weaker than the force for the robot 20 to support the material M in the downward direction. As the material M in which the cut has been made is rotated more, more content come out, and thus the material M becomes lighter, and the material M is more likely to fall from the first support section 60A and the second support section 60B.

For example, there may be a case in which, based on simulation, it has been identified that when the material M is rotated by an angle θ (θ is any positive number), the weight of the material M is reduced by n% (n is any positive number) due to the discharge of the content, and the supporting force is reduced by m% (m) due to a decrease in frictional force. Further, based on simulation, the minimum supporting force at which the material M does not fall has been calculated based on the angle θ, the reduction "n" in weight, and the reduction "m" in supporting force. In this case, a supporting force equal to or more than the calculated minimum supporting force may be defined in the support program.

The robot control system 1 of Modification Example 7 causes the robots 20 to support the material M with a supporting force based on the force for the robot 20 to support the material M in the downward direction. The robot control system 1 can support the material M with a supporting force corresponding to the force for supporting the material M in the downward direction.

### [6-8. Modification Example 8]

For example, in Modification Example 1 and Modification Example 2, description has been given of a case in which the content remaining in the material M is discharged by deforming the material M. Further, in Modification Example 3, description has been given of a case in which the content remaining in the material M is discharged by tilting the material M. The content remaining in the material M may also be discharged from the material M by another method.

The robot control system 1 of Modification Example 8 includes an additional cut control module 101E. The additional cut control module 101E causes the robots 20 to move at least one of the cutter 40 and the material M so that an additional cut is made in the material M with the cutter 40 when the material M is rotated or after the material M is rotated. The robot which makes the additional cut may be another robot 20 different from the first robot 20A and the second robot 20B, but in Modification Example 8, the robot which makes the additional cut is the first robot 20A.

In Modification Example 8, after the first robot 20A is detached from the material M in the example of FIG. 17, the cutter 40 is reattached to the first robot 20A. The robot controller 10 may cause the cutter 40 to be attached to the first robot 20A by executing the tool change code described in the embodiment. The data storage unit 100 in Modification Example 8 stores an additional cut program. The additional cut program is a program indicating an operation for making the additional cut.

For example, the additional cut control module 101E executes the additional cut program, and controls the first robot 20A so that the first robot 20A moves the cutter 40 to make the additional cut in the material M. The position of the additional cut is defined in the additional cut program. The position of the additional cut may be defined in a parameter referred to by the additional cut program. The position of the additional cut may be dynamically determined by recognizing the position and the shape of the material M by the camera 30.

For example, the additional cut control module 101E causes the first robot 20A to move the cutter 40 to the position of the additional cut. The additional cut control module 101E causes the first robot 20A to make the additional cut in the material M by moving the cutter 40 in a predetermined direction while keeping the cutter 40 in contact with the material M. Then, the robot controller 10 may cause the second robot 20B supporting the material M to deform or tilt the material M in order to discharge the content from the additional cut.

The robot control system 1 of Modification Example 8 causes the robots 20 to move at least one of the cutter 40 and the material M so that an additional cut is made in the material M with the cutter 40 when the material M is rotated or after the material M is rotated. As a result of the additional cut, the robot control system 1 can discharge the content of the material M more easily.

### [6-9. Other Modification Examples]

For example, the above-mentioned modification examples may be combined.

For example, each of the attracting devices 61A and 61B of the first support section 60A and the second support section 60B may include a floating mechanism so that when the material M is rotated, the direction of the attracting devices 61A and 61B changes in accordance with the movement of the material M. As a result, the load on the attracting devices 61A and 61B can be reduced. In other words, when the material M is rotated, the attracting devices 61A and 61B may follow the movement of the material M to prevent an excessive load from being applied to the attracting devices 61A and 61B. For example, the robot controller 10 may change the way the material M is cut by the first robot 20A based on the type of the material M.

For example, description has been given of a case in which the first robot 20A moves the cutter 40 and makes a cut in the material M, but the cutter 40 may be arranged at a place other than the first robot 20A and the second robot 20B. The cutter 40 may be arranged near the work table T with the blade facing downward or sideways. In this case, the robot controller 10 may cause each of the first robot 20A and the second robot 20B to support the material M, and make the cut in the material M by pressing the material M against the cutter 40. This operation may be defined in the cut program.

For example, for a cut similar to that illustrated in FIG. 6, the robot controller 10 causes each of the first robot 20A and the second robot 20B to move along the same path as the cut while pressing the material M against the cutter 40. By doing this, the cutter 40 is relatively moved in the same manner as in the embodiment when viewed from the material M, and thus a cut similar to that illustrated in FIG. 6 can be made. The processing after the cut is made in the material M may be the same as in the embodiment and Modification Example 1 to Modification Example 8. Even when each of the first robot 20A and the second robot 20B makes the cut by moving the material M, each of the processing steps described in the embodiment and Modification Example 1 to Modification Example 8 can be applied.

For example, each of the functions described above may be implemented by any device of the robot control system 1. The functions described as being included in one robot controller 10 may be shared among a plurality of robot controllers 10.

### [7. Supplementary Notes]

For example, the robot control system can also have the following configurations.
(1) A robot control system, including:
   one or more robots each configured to perform work on a material including a content;
   a cut control module configured to cause the one or more robots to move at least one of a cutter and the material so that a cut is made in the material with the cutter; and
   a rotation control module configured to cause the one or more robots to rotate the material so that the cut faces downward.
(2) The robot control system according to Item (1), further including:
   a first robot;
   a second robot;
   a first rotation control module configured to cause the first robot to rotate the material so that the cut faces downward; and
   a second rotation control module configured to cause the second robot to rotate the material in cooperation with the first robot so that the cut faces downward.
(3) The robot control system according to Item (1) or (2), further including a multi-cut control module configured to cause the one or more robots to move at least one of the cutter and the material so that a plurality of cuts including the cut are made in the material with the cutter.
(4) The robot control system according to any one of Items (1) to (3), further including an opening cut control module configured to cause the one or more robots to move at least one of the cutter and the material so that the cut capable of forming a planar opening is made in the material with the cutter.
(5) The robot control system according to Item (4), further including a graphic cut control module configured to cause the one or more robots to move at least one of the cutter and the material so that a graphic drawn by the cut made in the material becomes an open graphic.
(6) The robot control system according to any one of Items (1) to (5), further including a deforming control module configured to control the one or more robots supporting the material so that the material deforms when the material is rotated or after the material is rotated.
(7) The robot control system according to Item (6), further including a bending control module configured to control the one or more robots supporting the material so that the material is bent when the material is rotated or after the material is rotated.
(8) The robot control system according to any one of Items (1) to (7), further including a tilt control module configured to control the one or more robots supporting the material so that the material is tilted in another direction different from a direction of rotation by the rotation control module.
(9) The robot control system according to Item (5), further including a direction rotation control module configured to cause the one or more robots to rotate the material so that a flap created by formation of the planar opening is turned upward.
(10) The robot control system according to any one of Items (1) to (9), further including:
   a weight information acquisition module configured to acquire weight information on a weight of the material; and
   a weight rotation control module configured to cause the one or more robots to rotate the material based on the weight information.
(11) The robot control system according to Item (10), further including:
   a measurement result information acquisition module configured to acquire measurement result information on a measurement result obtained by a measuring unit of a container to which the content is transferred; and
   a measurement result rotation control module configured to cause the one or more robots to rotate the material based on the measurement result information.
(12) The robot control system according to Item (2), further including:
   a detachment control module configured to detach any one robot of the first robot or the second robot from the material after the material is rotated and at least a part of the content is discharged from the material; and
   a conveyance control module configured to cause, of the first robot and the second robot, a robot different from the detached one robot to convey the material.
(13) The robot control system according to Item (12), further including a rotation-and-conveyance control module configured to cause the different robot to rotate the material so that at least a part of the cut faces upward, and then convey the material.
(14) The robot control system according to any one of Items (1) to (13), further including:
   a support-and-cut control module configured to control the one or more robots so that the cut is made by the cutter in the material placed on a support section supporting the material from below; and
   a support control module configured to cause the one or more robots connected to the support section to support the material.
(15) The robot control system according to any one of Items (1) to (14), further including a supporting force control module configured to cause the one or more robots to support the material with a supporting force based on a force for the one or more robots to support the material in a downward direction.
(16) The robot control system according to any one of Items (1) to (15), further including an additional cut control module configured to cause the one or more robots to move at least one of the cutter and the material so that an additional cut is made in the material with the cutter when the material is rotated or after the material is rotated.

While there have been described what are at present considered to be certain embodiments of the invention, it will be understood that various modifications may be made thereto, and it is intended that the appended claims cover all such modifications as fall within the true spirit and scope of the invention.

## Claims

1. A robot control system (1), comprising:
one or more robots (20) configured to perform work on a material (M) including a content;
a cut control module (101) configured to cause the one or more robots (20) to move at least one of a cutter (40) and the material (M) so that a cut is made in the material (M) with the cutter (40); and
a rotation control module (103) configured to cause the one or more robots (20) to rotate the material (M) so that the cut faces downward.

2. The robot control system (1) according to claim 1, further comprising:
a first robot (20A);
a second robot (20B);
a first rotation control module (103A) configured to cause the first robot (20A) to rotate the material (M) so that the cut faces downward; and
a second rotation control module (103B) configured to cause the second robot (20B) to rotate the material (M) in cooperation with the first robot (20A) so that the cut faces downward.

3. The robot control system (1) according to claim 1 or 2, further comprising a multi-cut control module (101A) configured to cause the one or more robots (20) to move at least one of the cutter (40) and the material (M) so that a plurality of cuts including the cut are made in the material (M) with the cutter (40).

4. The robot control system (1) according to any one of claims 1 to 3, further comprising an opening cut control module (101B) configured to cause the one or more robots (20) to move at least one of the cutter (40) and the material (M) so that the cut capable of forming a planar opening is made in the material (M) with the cutter (40).

5. The robot control system (1) according to claim 4, further comprising a graphic cut control module (101C) configured to cause the one or more robots (20) to move at least one of the cutter (40) and the material (M) so that a graphic drawn by the cut made in the material (M) becomes an open graphic.

6. The robot control system (1) according to any one of claims 1 to 5, further comprising a deforming control module (104) configured to control the one or more robots (20) supporting the material (M) so that the material (M) deforms when the material (M) is rotated or after the material (M) is rotated.

7. The robot control system (1) according to claim 6, further comprising a bending control module (104A) configured to control the one or more robots (20) supporting the material (M) so that the material (M) is bent when the material (M) is rotated or after the material (M) is rotated.

8. The robot control system (1) according to any one of claims 1 to 7, further comprising a tilt control module (105) configured to control the one or more robots (20) supporting the material (M) so that the material (M) is tilted in another direction different from a direction of rotation by the rotation control module (103).

9. The robot control system (1) according to claim 5, further comprising a direction rotation control module (103C) configured to cause the one or more robots (20) to rotate the material (M) so that a flap created by formation of the planar opening is turned upward.

10. The robot control system (1) according to any one of claims 1 to 9, further comprising:
a weight information acquisition module (106) configured to acquire weight information on a weight of the material (M); and
a weight rotation control module (103D) configured to cause the one or more robots (20) to rotate the material (M) based on the weight information.

11. The robot control system (1) according to claim 10, further comprising:
a measurement result information acquisition module (106A) configured to acquire measurement result information on a measurement result obtained by a measuring unit of a container to which the content is transferred; and
a measurement result rotation control module (103E) configured to cause the one or more robots (20) to rotate the material (M) based on the measurement result information.

12. The robot control system (1) according to claim 2, further comprising:
a detachment control module (107) configured to detach any one robot (20A or 20B) of the first robot (20A) or the second robot (20B) from the material (M) after the material (M) is rotated and at least a part of the content is discharged from the material (M); and
a conveyance control module (108) configured to cause, of the first robot (20A) and the second robot (20B), a robot (20A or 20B) different from the detached one robot (20A or 20B) to convey the material (M).

13. The robot control system (1) according to claim 12, further comprising a rotation-and-conveyance control module (108A) configured to cause the different robot (20A or 20B) to rotate the material (M) so that at least a part of the cut faces upward, and then convey the material (M).

14. A robot controller (10) capable of controlling one or more robots (20) each configured to perform work on a material (M) including a content, the robot controller (10) comprising:
a cut control module (101) configured to cause the one or more robots (20) to move at least one of a cutter (40) and the material (M) so that a cut is made in the material (M) with the cutter (40); and
a rotation control module (103) configured to cause the one or more robots (20) to rotate the material (M) so that the cut faces downward.

15. A robot control method of controlling one or more robots (20) each configured to perform work on a material (M) including a content, the robot control method comprising:
causing the one or more robots (20) to move at least one of a cutter (40) and the material (M) so that a cut is made in the material (M) with the cutter (40); and
causing the one or more robots (20) to rotate the material (M) so that the cut faces downward.
